# EUROPÄISCHE PATENTANMELDUNG

(11) **EP 4 467 222 A1**
(43) Veröffentlichungstag der Anmeldung: **27.11.2024**
(21) Anmeldenummer: 24175466.2
(22) Anmeldetag: 13.05.2024
(51) Int. Cl.: B01D 53/04, B01D 53/26

(54) **ENERGIESYSTEM UMFASSEND EINE TROCKNUNGSEINRICHTUNG FÜR ELEKTROLYTISCH ERZEUGTEN WASSERSTOFF**

(30) Priorität: 22.05.2023 DE 102023113240
(71) Anmelder: HPS Home Power Solutions AG, 12489 Berlin (DE)
(72) Erfinder: FÖRSTER, Tilo, 12103 Berlin (DE); TROTTNER, Alexander, 12351 Berlin (DE); LEVERENZ, Hendrik, 12053 Berlin (DE); BENZ, Uwe, 78267 Aach (DE); PLANERT, Thimo, 10829 Berlin (DE)
(74) Vertreter: Müller, Thomas

(57) **Zusammenfassung**

Die vorliegende Erfindung betrifft unter anderem ein Energiesystem (10) aufweisend eine Elektrolyseeinrichtung (21) zur Erzeugung von Wasserstoff, eine Speichereinrichtung (31; 32) zum Speichern des erzeugten Wasserstoffs, sowie eine Trocknereinrichtung (26) zum Trocknen des in der Elektrolyseeinrichtung (21) erzeugten Wasserstoffs, wobei die Trocknereinrichtung (26) eine Trocknungsbehältereinrichtung (42) mit wenigstens einem Trocknungsbehälter (42a) aufweist, in dem sich ein Trocknungsmittel (43) befindet, wobei die Trocknungsbehältereinrichtung (42) eine Eingangsseite (46) und eine Ausgangsseite (47) aufweist, wobei die Eingangsseite (46) der Trocknungsbehältereinrichtung (42) einen Zugang (48) für den von der Elektrolyseeinrichtung (21) erzeugten Wasserstoff aufweist, und wobei die Ausgangsseite (47) der Trocknungsbehältereinrichtung (42) einen Abgang (49) für den im Trocknungsbehälter (42a) getrockneten Wasserstoff aufweist. Der Wasserstoff wird in einer ersten Strömungsrichtung (52a) durch die Trocknungsbehältereinrichtung (42) geführt. Um eine Regeneration des Trocknungsmittels (43) ohne hohe Verluste an Wasserstoff und Energie bei deutlich reduziertem Serviceaufwand, durchführen zu können, ist vorgesehen, dass die Trocknereinrichtung (26) für eine Regeneration des Trocknungsmittels (43) mittels eines Regenerationsmittels in Form von getrocknetem Wasserstoff bereitgestellt ist, dass das Regenerationsmittel in einer von der ersten Strömungsrichtung (52a) abweichenden zweiten Strömungsrichtung (52b), durch die Trocknungsbehältereinrichtung (42) geführt wird, und dass der Wasserstoff und das Regenerationsmittel insbesondere im Gegenstrom (53) durch die Trocknungsbehältereinrichtung (42) geführt werden.

## Beschreibung

Die vorliegende Erfindung betrifft zunächst ein Energiesystem gemäß dem Oberbegriff von Patentanspruch 1. Weiterhin betrifft die Erfindung auch ein Verfahren zum Regenerieren eines im Trocknungsbehälter einer Trocknereinrichtung befindlichen Trocknungsmittels in entsprechenden Energiesystemen.

Energiesysteme der gattungsgemäßen Art sind im Stand der Technik bereits auf vielfältige Weise bekannt. Mit derartigen Systemen wird üblicherweise Energie für verschiedenste Anwendungsgebiete erzeugt und bereitgestellt.

Bei einer bekannten Art solcher Energiesysteme handelt es sich um ein Gebäudeenergiesystem, mittels dessen Energie in verschiedenen Formen für das Gebäude erzeugt und bereitgestellt wird. Bei einer aus dem allgemeinen Stand der Technik bekannten Ausführungsform wird in einer ersten Betriebsweise in einer Elektrolyseeinrichtung Wasserstoff erzeugt. Der erzeugte Wasserstoff wird anschließend in einer Speichereinrichtung gespeichert. Während einer zweiten Betriebsweise des Energiesystems wird der Wasserstoff aus der Speichereinrichtung ausgespeichert und in einer Brennstoffzelleneinrichtung verbraucht. Üblicherweise sind die vorbeschriebenen Komponenten des Energiesystems räumlich voneinander getrennt und über eine Verbindungsleitungseinrichtung miteinander verbunden.

Der während der Elektrolyse erzeugte Wasserstoff ist üblicherweise noch feucht. Deshalb muss er, bevor er komprimiert werden und/oder in der Speichereinrichtung gespeichert werden kann, vorab getrocknet werden. Dazu kommen geeignete Trocknereinrichtungen zum Einsatz. Diese weisen in der Regel einen Trocknungsbehälter auf, in dem sich ein Trocknungsmittel befindet. Der in der Elektrolyseeinrichtung erzeugte, noch feuchte Wasserstoff, tritt eingangsseitig in den Trocknungsbehälter ein, durchströmt den Trocknungsbehälter und das darin befindliche Trocknungsmittel und tritt als getrockneter Wasserstoff ausgangsseitig aus der Trocknereinrichtung aus. Derartige Trocknereinrichtungen sind aus dem Stand der Technik grundsätzlich bereits bekannt. Anschließend wird der getrocknete Wasserstoff in der Speichereinrichtung gespeichert.

Die Trocknereinrichtung musss in regelmäßigen Abständen regeneriert werden, beispielsweise, indem das Trocknungsmittel wieder getrocknet wird. Dazu sind im Stand der Technik bereits unterschiedliche Maßnahmen bekannt geworden.

So ist es bekannt, Trocknungsmittel durch Anlegen eines Vakuums zu regenerieren. In der DE 197 48 843 A1 beispielsweise ist beschrieben, dass ein in einem Trocknungsraum einer Trocknungskammer befindliches Gut zu Trocknungszwecken über eine Vakuumpumpe mit einem Unterdruck beaufschlagt wird.

Gemäß einer anderen bekannten Maßnahme wird ein Adsorbens, nach einer vorherigen Beladung des Adsorbens bei höherem Druck und niedriger Temperatur durch Spülen mit einem Inertgas bei höherer Temperatur und niedrigerem Druck regeneriert. Eine derartige Lösung ist beispielsweise aus der EP 078 966 A2 bekannt. Dort werden zur Herstellung hochreinen Wasserstoffs verschiedene Adsorbentien, unter anderem Silicagel, Zeolithe und Aktivkohle, zunächst bei höherem Druck und niedrigerer Temperatur mit wasserstoffhaltigen Prozessgasen durchströmt. Die unerwünschten Bestandteile, dort CO₂, CO, Methan, Stickstoff und ein sehr kleiner Teil an Wasserdampf werden adsorbiert und anschließend werden die Adsorbentien regeneriert, indem trockener und auf 300°C erhitzter, reiner Stickstoff bei abgesenktem Druck als Spülgas verwendet wird. Der mit den verunreinigten Stoffen beladene Stickstoff ist in einem solchen Fall als Abfallstoff weiter zu behandeln. Die Spülverluste sind über Optimierung der Vorrichtung und des Verfahrens zu minimieren.

Im Zusammenhang mit den eingangs beschriebenen Energiesystemen ist es häufig so, dass der Trocknungsbehälter in Form einer Kartusche ausgebildet ist, in welcher sich das Trocknungsmittel befindet. Bislang muss das Trocknungsmittel zum Zwecke der Regeneration in regelmäßigen Abständen getauscht werden. Das geschieht beispielsweise im Rahmen einer Wartung, bei der dann beispielsweise der gesamte Trocknungsbehälter ausgetauscht wird. Die erlaubte Länge der Wartungsintervalle ist insbesondere proportional zur Menge des eingesetzten Trocknungsmaterials und etwa umgekehrt proportional zur erzeugten Menge an Wasserstoff. Der Austausch der Trocknungsbehälter erfolgt manuell durch Servicepersonal vor Ort. Oder aber, das Trocknungsmaterial muss vor Ort ausgetauscht werden. Neben den Kosten für die Verschleißteile entstehen auf diese Weise unerwünschte Nebenkosten und beispielsweise auch Kosten durch den Austausch des Trocknungsmittels an einer zentralen Stelle. Ebenfalls unterliegen die Verbindungselemente, beispielsweise verwendete Klemmring-Rohrverbinder bei jedem Austausch der Kartuschen einem Verschleiß und sind nach mehrfach wiederholtem Öffnen und Schließen nicht mehr technisch dauerhaft dicht zu verschließen. Auch dies führt zu erhöhtem Wartungsaufwand und damit zu erhöhten Wartungskosten.

Beispielsweise ist es grundsätzlich auch möglich, eine regenerative Trocknung des Trocknungsmittels durch hohe Temperaturen herbeizuführen. Hohe Temperaturen können allerdings sicherheitskritisch sein, insbesondere hinsichtlich möglicher Zündquellen in Bezug auf eventuell austretendem Wasserstoff.

Wenn zur Regeneration Wasserstoff als Trägergas verwendet wird, wird dieser in der Regel danach ungenutzt an die Umgebung abgegeben. Dies wird beispielsweise in Elektrolyseeinrichtungen zur Erzeugung von Wasserstoff und/oder Sauerstoff auf solche Weise realisiert. Adäquate Maßnahmen zur sicheren Betriebsweise des technischen Systems sind zu treffen, in der Regel über hinreichende Verdünnung des austretenden Wasserstoffs oder durch gezieltes Ableiten des Wasserstoffs in die freie Umgebung außerhalb des Gebäudes unter gleichzeitiger Beachtung der sicherheitstechnischen Erfordernisse. Außerdem wird auf diese Weise wertvoller Wasserstoff in nennenswerter Menge, z.B. 10% des im Prozess erzeugten Wasserstoffs, verbraucht, der in einem Energiesystem für andere Zwecke, beispielsweise für den Betrieb der Brennstoffzelleneinrichtung, genutzt werden könnte.

In der JP2023-019061 A wird eine Elektrolyseeinrichtung offenbart, die noch feuchten Wasserstoff produziert. Der feuchte Wasserstoff wird in einer Trocknereinrichtung getrocknet und anschließend einer Speichereinrichtung zugeführt. Die Trocknungseinrichtung weist wenigstens einen Trocknungsbehälter auf. Zur Regeneration des im Trocknungsbehälter befindlichen Trocknungsmittels wird bereits getrockneter Wasserstoff verwendet. Zur Regeneration wird der trockene Wasserstoff über einen Wärmetauscher erwärmt und dem Trocknungsbehälter mit gleicher Strömungsrichtung zugeführt, mit welcher beim Trocknungsvorgang zuvor der feuchte Wasserstoff zugeführt wurde. Diese bekannte Lösung ist, insbesondere aufgrund einer Vielzahl von Ventilen und einer erforderlichen Steuerung, konstruktiv aufwändig. Außerdem reicht eine Erwärmung des trockenen Wasserstoffs in der vorgeschlagenen Art nicht für eine geforderte schnelle und vollständige Regeneration des Trockners aus. Hierzu müsste der trockene Wasserstoff auf Temperaturen deutlich über die Regeneriertemperaturen erhitzt werden, vorzugsweise auf über 200°C erhitzt werden.

Der vorliegenden Erfindung liegt deshalb die Aufgabe zugrunde, eine energieeffiziente, sichere und servicefreundliche Trocknereinrichtung sowie ein Verfahren zum Regenerieren einer Trocknereinrichtung bereitzustellen, bei/mit dem eine Regeneration, zumindest eine Teilregeneration, des Trocknungsmittels ohne hohe Verluste an Wasserstoff und Energie, vorzugsweise in einem voll regenerativen Betrieb, bei deutlich reduziertem Serviceaufwand, durchführbar ist.

Diese Aufgabe wird erfindungsgemäß gelöst durch das Energiesystem mit den Merkmalen des unabhängigen Patentanspruchs 1, welches den ersten Aspekt der Erfindung darstellt, und durch das Verfahren zum Regenerieren eines im Trocknungsbehälter einer Trocknereinrichtung befindlichen Trocknungsmittels in einem Energiesystem mit den Merkmalen des unabhängigen Patentanspruchs 11, welches den zweiten Aspekt der Erfindung darstellt.

Weitere Merkmale und Details der Erfindung ergeben sich aus den Unteransprüchen, aus der Beschreibung sowie aus den Zeichnungen. Dabei gelten Merkmale und Details, die im Zusammenhang mit einem der Erfindungsaspekte offenbart sind, vollumfänglich auch im Zusammenhang mit jeweils allen anderen Erfindungsaspekten, und umgekehrt, so dass hinsichtlich der Offenbarung der einzelnen Erfindungsaspekte stets vollinhaltlich auch Bezug auf die jeweils anderen Erfindungsaspekte genommen wird. Insbesondere ergibt sich der Ablauf des erfindungsgemäßen Verfahrens auch aus der Funktionsbeschreibung sowie der Beschreibung des Zusammenwirkens der einzelnen Komponenten des erfindungsgemäßen Energiesystems, so dass hinsichtlich des Ablaufs und der Durchführung des erfindungsgemäßen Verfahrens zur Vermeidung von Wiederholungen auch auf die Ausführungen zu dem erfindungsgemäßen Energiesystem vollinhaltlich Bezug genommen und verwiesen wird.

Die vorliegende Erfindung ist insbesondere anwendbar für die Trocknung von Wasserstoffgas, welches während eines Elektrolysevorgangs in einer Wasser-Elektrolyseeinrichtung erzeugt wird. "Elektrolyse" bezeichnet insbesondere die Aufspaltung einer chemischen Verbindung durch den Einsatz von elektrischem Strom. Durch die Elektrolyse werden also die in der Verbindung enthaltenen Stoffe voneinander getrennt. Die Elektrolyse wird in einer Elektrolyseeinrichtung durchgeführt.

Der erzeugte Wasserstoff ist in der Regel noch feucht, so dass er, bevor er im weiteren Prozessablauf komprimiert und/oder in der Speichereinrichtung gespeichert wird, in der Trocknereinrichtung, welche der Elektrolyseeinrichtung nachgeordnet ist, getrocknet wird. Dabei kann getrockneter Wasserstoff erzeugt werden, ohne regelmäßiges Tauschen des Trocknungsmittels.

Gemäß dem ersten Aspekt der Erfindung wird ein Energiesystem bereitgestellt, welches die Merkmale des unabhängigen Patentanspruchs 1 aufweist.

Das Energiesystem, bei dem es sich bevorzugt um ein Gebäudeenergiesystem oder ein Hausenergiesystem handelt, zu dem weiter unten ein bevorzugtes Ausführungsbeispiel beschrieben wird, weist eine Reihe unterschiedlicher Komponenten auf.

Zunächst weist das Energiesystem eine Elektrolyseeinrichtung zur Erzeugung von Wasserstoff auf.

In besonders bevorzugter Ausgestaltung, hinsichtlich des Gegenstands der Erfindung jedoch nur optional, weist das Energiesystem auch eine Brennstoffzelleneinrichtung auf. Die Brennstoffzelleneinrichtung weist, neben anderen erforderlichen Komponenten, eine oder mehrere Brennstoffzellen, insbesondere einen Brennstoffzellenstapel, auf. Bei den Brennstoffzellen handelt es sich in einer bevorzugten Ausführungsform um luftgekühlte Brennstoffzellen, vorzugsweise mit offener Kathode. Der Einsatz anderer Brennstoffzellenausführungen ist ebenfalls realisierbar und in der Erfindung explizit mit eingeschlossen. Die Brennstoffzelle läuft beim Einsatz in einem Gebäude- beziehungsweise Hausenergiesystem bevorzugt nahe dem atmosphärischen Umgebungsdruck, vorzugsweise bei einem Überdruck zu Atmosphäre von ca. 200 bis 700 mbar. Bei diesem Druck kann die Brennstoffzelle mit bis nahe 100% relativer Feuchte beladenem Wasserstoff, bezogen auf die Betriebstemperatur der Brennstoffzelle, betrieben werden. Die nominelle Betriebstemperatur der Brennstoffzelle liegt in der Regel zwischen 40°C und 90°C. Das bedeutet insbesondere, dass während des Regenerierungsprozesses der Trocknereinrichtung der zuvor in der Speichereinrichtung nahezu trocken gelagerte Wasserstoff eine entsprechende Menge an Wasser gasförmig aufnehmen kann. Ein solcherart befeuchteter Wasserstoff trägt in der Regel auch zu einer Erhöhung der Lebensdauer der Brennstoffzelle bei.

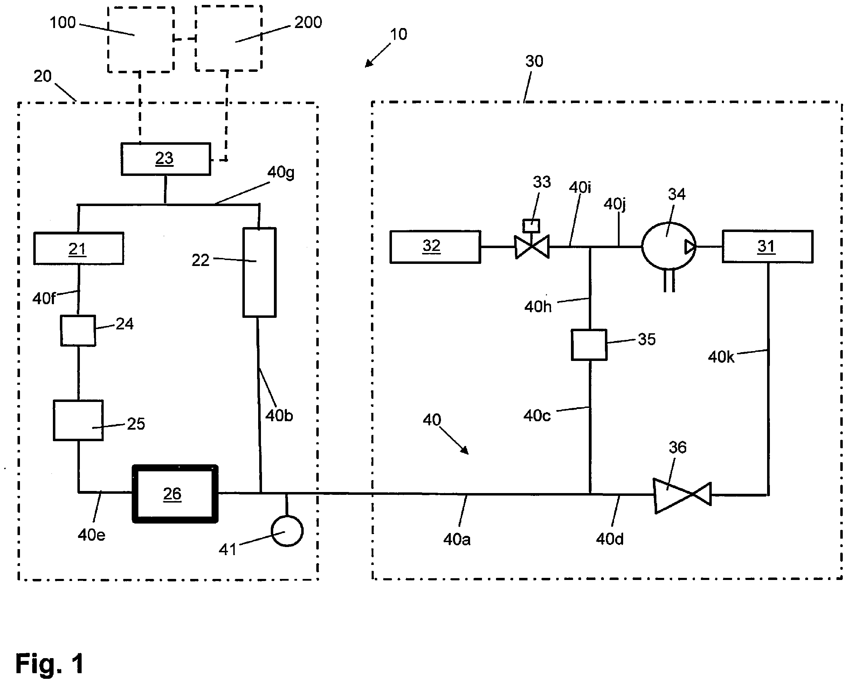

Weiterhin weist das Energiesystem eine Speichereinrichtung auf, in der der erzeugte Wasserstroff so lange gespeichert wird, bis er benötigt wird, beispielsweise in der Brennstoffzelleneinrichtung zur Erzeugung von elektrischem Strom. Beispielsweise kann die Speichereinrichtung einen Hochdruckspeicher aufweisen, in dem der von der Elektrolyseeinrichtung erzeugte Wasserstoff mit bis zu 700bar gespeichert wird. Der Wasserstoff ist während der Speicherung stets als technisch trocken, typischerweise mit einem Taupunkt von -30°C bis -60°C, zu betrachten und entspricht, wenn er für den Betrieb von Brennstoffzellen verwendet wird, mindestens einem Reinheitsgrad von 3.5. Bei dem Taupunkt handelt es sich insbesondere um den Kondensationspunkt des Wasserstoffs. Zusätzlich kann die Speichereinrichtung auch noch einen Mitteldruckspeicher aufweisen, in dem der von der Elektrolyseeinrichtung erzeugte Wasserstoff zwischengespeichert wird, bevor er endgültig in die Hochdruckspeichereinrichtung eingespeichert wird. Ein Beispiel hierzu wird in Verbindung mit Figur 1 beschrieben. Im Folgenden wird zu Vereinfachungszwecken allgemein nur von einer Speichereinrichtung gesprochen, die jedoch die unterschiedlichen Speicher aufweisen kann. Für die Erfindung grundsätzlich ausreichend ist, dass in der Speichereinrichtung getrockneter Wasserstoff gespeichert wird/ist.

Der in der Elektrolyseeinrichtung erzeugte Wasserstoff ist in der Regel noch feucht, so dass er vor einer Kompression und Einspeicherung in die Speichereinrichtung getrocknet werden muss. Dazu weist das erfindungsgemäße Energiesystem eine in besonderer Weise ausgebildete Trocknereinrichtung zum Trocknen des in der Elektrolyseeinrichtung erzeugten Wasserstoffs auf.

Die Trocknereinrichtung weist eine Trocknerbehältereinrichtung auf, die sich dadurch auszeichnet, dass sie einen oder mehrere Trocknungsbehälter aufweist, in dem sich wenigstens eine Art eines Trocknungsmittel befindet. Der zu trocknende Wasserstoff tritt eingangsseitig in die Trocknungsbehältereinrichtung ein, durchströmt diese, und wird auf seinem Weg durch die Trocknungsbehältereinrichtung getrocknet. Der getrocknete Wasserstoff verlässt die Trocknungsbehältereinrichtung ausgangsseitig. Im einfachsten Fall weist die Trocknungsbehältereinrichtung einen einzigen Trocknungsbehälter auf und wird somit durch diesen gebildet. Es versteht sich, dass anstelle eines Trocknungsbehälters auch mehr als ein Trocknungsbehälter durchflossen werden können. In diesem Fall weist die Trocknungsbehältereinrichtung zwei oder mehr Trocknungsbehälter auf, die dann in Summe die Trocknungsbehältereinrichtung bilden. Ebenfalls können die Trocknungsmittel in dem mindestens einen Trocknungsbehälter unterschiedlich sein, sich also auch bezüglich ihrer Kennwerte zur Absorption und Desorption als Funktion von Druck und Temperatur deutlich unterscheiden. Oder aber, es befinden sich unterschiedliche Trocknungsmittel in unterschiedlichen Trocknungsbehältern. Beispiele für geeignete Trocknungsbehältereinrichtungen, ebenso wie für geeignete Trocknungsmittel, werden im Verlauf der Beschreibung näher erläutert.

Die Trocknungsbehältereinrichtung weist eine Eingangsseite und eine Ausgangsseite auf, wobei die Eingangsseite der Trocknungsbehältereinrichtung einen Zugang für den von der Elektrolyseeinrichtung erzeugten Wasserstoff aufweist oder definiert, und wobei die Ausgangsseite der Trocknungsbehältereinrichtung einen Abgang für den in der Trocknungsbehältereinrichtung getrockneten Wasserstoff aufweist oder definiert.

Ein Zugang ist insbesondere eine Komponente oder ein Teilbereich der Trocknungsbehältereinrichtung, über den ein Medium, beispielsweise der erzeugte Wasserstoff und/oder das Regenerationsmittel, der Trocknungsbehältereinrichtung zugeführt wird. Ein Abgang ist insbesondere eine Komponente oder ein Teilbereich der Trocknungsbehältereinrichtung, über den ein Medium, beispielsweise der erzeugte Wasserstoff und/oder das Regenerationsmittel, aus der Trocknungsbehältereinrichtung abgeführt wird. Die Abgänge und Zugänge können beispielsweise in Form entsprechender Öffnungen in der Trocknungsbehältereinrichtung ausgebildet sein, oder aber als entsprechende Ansatzstücke, oder aber als entsprechende Leitungselemente. In jedem Fall erfolgt über den Zugang eine Zufuhr von Medium in die Trocknungsbehältereinrichtung, während über den Abgang eine Abfuhr von Medium aus der Trocknungsbehältereinrichtung erfolgt.

Der zu trocknende, noch feuchte Wasserstroff, tritt über den Zugang in die Trocknungsbehältereinrichtung ein und durchströmt diese in einer ersten Strömungsrichtung. Während der Wasserstoff die Trocknungsbehältereinrichtung durchströmt, wird die Feuchtigkeit an dem in der Trocknungsbehältereinrichtung befindlichen Trocknungsmittel angelagert. Dies geschieht gemäß einer Ausführungsform im Wege der Adsorption. Adsorption bedeutet insbesondere, dass sich Atome und Moleküle einer Flüssigkeit oder eines Gases an oder in dem Trocknungsmittel anlagern. Das Trocknungsmittel, bei dem es sich um ein Adsorptionsmittel handelt, wird folglich mit Feuchtigkeit beladen.

Das Energiesystem gemäß der Erfindung ist derart ausgebildet, dass die Trocknereinrichtung für eine Regeneration des in der Trocknungsbehältereinrichtung befindlichen Trocknungsmittels mittels eines Regenerationsmittels in Form von getrocknetem Wasserstoff bereitgestellt ist. Dazu weist, gemäß einer Ausführungsform, die Trocknungsbehältereinrichtung, insbesondere die Ausgangsseite der Trocknungsbehältereinrichtung, einen Zugang für das Regenerationsmittel auf. Darüber hinaus weist die Trocknungsbehältereinrichtung, insbesondere die Eingangsseite der Trocknungsbehältereinrichtung, auch einen Abgang für das Regenerationsmittel auf.

Über das Regenerationsmittel wird das beladene Trocknungsmittel regeneriert. Dies erfolgt gemäß einer Ausführungsform im Wege der Desorption. Desorption ist grundsätzlich die Umkehrung der Adsorption. Desorption bedeutet insbesondere, dass flüchtige oder lösliche Verbindungen aus dem Adsorbat, hier dem Trocknungsmittel, freigesetzt werden. Desorption findet insbesondere bei im Vergleich zum Adsorptionsvorgang höheren Temperaturen statt. Die Desorption ist insbesondere ein energieverbrauchender Prozess, vergleichbar mit dem Verdampfen einer Flüssigkeit, welches während des Verdampfungsvorgangs die ständige Zufuhr thermischer Energie in ausreichender Menge erfordert, damit die Temperatur nicht absinkt und der Verdampfungsvorgang zum Erliegen kommt.

Gemäß der Erfindung ist/wird das Regenerationsmittel in einer von der ersten Strömungsrichtung abweichenden zweiten Strömungsrichtung durch die Trocknungsbehältereinrichtung führbar/geführt. Das heißt, zwischen der Strömungsrichtung während der Trocknung und der Strömungsrichtung während der Regeneration erfolgt eine Richtungsänderung, was einen wesentlichen Aspekt der Erfindung darstellt. Dadurch ist der Strom des Regenerationsmittels durch die Trocknungsbehältereinrichtung besser ausnutzbar. Das liegt daran, dass die Beladung des Trocknungsmittels in Richtung des Zugangs der Trocknungsbehältereinrichtung, die insbesondere der Elektrolyseeinrichtung zugewandt ist, zunimmt, und die treibende Partialdruckdifferenz damit größer wird. Die Erfindung ist hinsichtlich der Richtungsumkehr nicht auf bestimmte Strömungsrichtungen beschränkt. Richtungsänderung bedeutet insbesondere, dass ein Richtungswechsel stattfindet, sprich, dass die Strömungsrichtung des zu trocknenden Wasserstoffs durch die Trocknungsbehältereinrichtung während des Trocknungsvorgangs/Adsorptionsvorgangs eine andere ist als die Strömungsrichtung des Regerationsmittels durch die Trocknungsbehältereinrichtung während des Regenerationsvorgangs/Desorptionsvorgangs während des Regenerationsvorgangs.

Gemäß einer Ausführungsform ist/wird der Wasserstoff und das Regenerationsmittel im Gegenstrom durch die Trocknungsbehältereinrichtung führbar/geführt. In diesem Fall ist die Strömungsrichtung des Wasserstoffs durch die Trocknungsbehältereinrichtung während der Trocknung entgegengesetzt zur Strömungsrichtung des Regenrationsmittels durch die Trocknungsbehältereinrichtung während der Regenration. Zwischen Trocknung und Regeneration findet dann eine Richtungsumkehr des die Trocknungsbehältereinrichtung durchströmenden Mediums statt. Eine solche Vorrichtung im Gegenstrom ist anlagentechnisch einfach und kostengünstig realisierbar. Im Betrieb der Trocknungsbehältereinrichtung erfolgt somit eine Strömung in entgegengesetzten Richtungen. Eine solche Führung im Gegenstrom hat eine Reihe von Vorteilen.

Dies soll anhand eines Beispiels verdeutlicht werden, Der zu trocknende, noch feuchte Wasserstoff tritt über den Zugang in die Trocknungsbehältereinrichtung ein. Im Zugangsbereich ist das Trocknungsmittel, etwa das Adsorptionsmittel, dann stärker beladen als im Abgangsbereich der Trocknungsbehältereinrichtung. Im Regenerationsbetrieb, insbesondere während der Desorption, wird zuerst der Bereich im Abgangsbereich der Trocknungsbehältereinrichtung regeneriert/desorbiert, auch bei nicht vollständiger Regeneration. Das führt dazu, das bei erneuter Trocknung/Adsorption wieder eine hohe Trocknungsrate/Adsorptionsrate erzielt werden kann, da sich hinter dem regenerierten/desorbierten Bereich kein beladener Bereich mehr befindet. Wird nun, wie hier vorgeschlagen, im Gegenstrom getrocknet, so entsteht darüber hinaus über die zeitlich längste Phase des Trocknungsvorgangs eine verstärkte Schichtung des örtlichen Beladungszustandes im Trockner. Der Beladungszustand in Richtung des eintretenden trockenen Gasstromes, der das Regenerationsmittel darstellt, wird schnell sehr niedrig, während am Austritt des nun feuchteren Gasstromes die Feuchtigkeitsbeladung noch lange sehr hoch bleibt. Wird der Trocknungsvorgang nun unterbrochen und auf den Normalbetrieb, das heißt Elektrolysebetrieb mit Trocknung und anschließender Kompression, gewechselt, so können die nun bereits regenerierten Bereiche die Trocknung wieder vollständig gewährleisten. Weiterhin verläßt in der Regenerationsphase der Wasserstoff, der das Regenerationsmittel darstellt, den Trockner, beispielsweise in Richtung der Brennstoffzelleneinrichtung, lange Zeit mit relativ hoher Feuchte, die insbesondere über die lokale Temperatur der Trocknungssubstanz am brennstoffzellenseitigen Ausgang detektierbar und auch steuerbar ist, so dass es insbesondere auch nicht zu unerwünschter Kondensation in den Leitungen und Ventilen zur Brennstoffzelle hin, sowie in der Wasserstoffverteilung innerhalb des Brennstoffzellenstacks kommt. Beispielsweise kann über weite Zeiträume des Regenerationsvorgangs die absolute Feuchte des Wasserstoffs am brennstoffzellenseitigen Ausgang durch eine lokal verstärkte Beheizung dieser Region erhöht werden oder aber durch Nichtbeheizung erniedrigt werden.

Gemäß einer Ausführungsform ist die Trocknungsbehältereinrichtung zur bidirektionalen Führung des Mediums durch die Trocknungsbehältereinrichtung bereitgestellt. Eine bidirektionale Führung bedeutet grundsätzlich, dass eine Führung von Medium in beiden Richtungen erfolgen kann, sowohl vom Zugang der Trocknungsbehältereinrichtung zum Abgang der Trocknungsbehältereinrichtung, und umgekehrt.

Für die Regeneration des Trocknungsmittels wird bereits getrockneter Wasserstoff verwendet, der sich, beispielsweise für den Brennstoffzellenbetrieb, in den entsprechenden Wasserstoff-Speichereinrichtungen befindet. Die Trocknungsbehältereinrichtung wird in einer ersten Betriebsweise von dem von der Elektrolyseeinrichtung erzeugten, noch feuchten Wasserstoff durchströmt, wobei dieser mittels des in der Trocknungsbehältereinrichtung befindlichen Trocknungsmittels getrocknet wird. Während des Trocknungsvorgangs wird die Feuchtigkeit beispielsweise an der Oberfläche oder in den Poren des, beispielsweise physikalisch wirkenden, Trocknungsmittels festgehalten. Der getrocknete Wasserstoff wird anschließend in der Wasserstoff-Speichereinrichtung gespeichert. Zum Regenerieren des Trocknungsmittels wird in einer zweiten Betriebsweise der trockene Wasserstoff aus der Wasserstoff-Speichereinrichtung entnommen und durchströmt die Trocknungsbehältereinrichtung als ein Regenerationsmittel. Der trockene Wasserstoff nimmt im Trocknungsmittel gespeicherte Feuchtigkeit auf, wodurch das Trocknungsmittel getrocknet und damit regeneriert wird. Bei diesem Vorgang ist die Desorptionswärme vorzugsweise in Form von, beispielsweise elektrischer, Beheizung des Trocknungsbehälters auf dem notwendigen Temperaturniveau zuzuführen. Anschließend kann der Wasserstoff anderen Prozessen des Energiesystems zugeleitet oder aus dem Energiesystem abgeleitet werden.

Die erste Betriebsweise erfolgt gemäß einer Ausführungsform nicht gleichzeitig zur zweiten Betriebsweise, sondern abwechselnd beziehungsweise nacheinander. Zuerst wird die erste Betriebsweise, das heißt die Trocknung durchgeführt. Anschließend wird die zweite Betriebsweise, das heißt die Regeneration, durchgeführt.

In einer bevorzugten Ausführungsform wird der Wasserstoff der Brennstoffzelleneinrichtung zugeführt. Für den Brennstoffzellenbetrieb und die Performance der Brennstoffzellen ist es durchaus von Vorteil, wenn der in die Brennstoffzellen eintretende Wasserstoff leicht angefeuchtet ist, was gemäß dem ersten Aspekt der Erfindung durch die Aufnahme von Feuchtigkeit aus dem Trocknungsmittel erfolgt. Um zu vermeiden, dass sich in den Brennstoffzellen Bereiche mit zu viel flüssigem Wasser und/oder Inertgasen bilden und die Brennstoffzelle im Betrieb auf Dauer nachhaltig schädigen, wird üblicherweise ein geeignetes Spülintervall, auch Purgeintervall genannt, für die Brennstoffzelleneinrichtung eingerichtet. Bei Betrieb mit feuchtem Wasserstoff kann es notwendig sein, den zeitlichen Abstand solcher Purgeintervalle zu verkürzen.

Wasserstoff wird als Trägerstrom zum Trocknen während der bestimmungsgemäßen Nutzung der Brennstoffzelleneinrichtung, das heißt während der Nutzung des Wasserstoffs in der Brennstoffzelleneinrichtung, verwendet. Dabei tritt kein Verlust an Wasserstoff auf. Ebenso werden keine erhöhten Sicherheitsanforderungen erforderlich, beispielsweise durch abzulassendes Trocknergas. Auch entstehen keine Wasserstoffemissionen, was klimaschädigend wäre.

Die Trocknereinrichtung ist insbesondere für eine saisonale Regeneration geeignet. Bei einem erfindungsgemäßen Energiesystem wird beispielsweise die Elektrolyseeinrichtung saisonal betrieben, beispielsweise während der Sommermonate, um in ausreichenden Mengen Wasserstoff zu erzeugen. Dieser wird nach seiner Trocknung in der Speichereinrichtung gespeichert. Die Speichereinrichtung ist dabei so groß bemessen, dass die für den Anwendungsbereich des Energiesystems erforderlichen Mengen an Wasserstroff erzeugt werden. Während anderer Zeiträume, beispielsweise in den Wintermonaten, wird die Elektrolyseeinrichtung nicht oder nur zeitweilig betrieben. In diesen Zeiträumen wird der gespeicherte Wasserstoff in einer Brennstoffzelleneinrichtung verwendet, um dort elektrischen Strom zu erzeugen. Vorzugsweise kann während dieser Zeiträume die Trocknung und Regeration des Trocknungsmittels erfolgen, indem der getrocknete Wasserstoff aus der Speichereinrichtung entnommen, als Regenerationsmittel durch den Trocknungsbehälter hindurchgeführt und von dort der Brennstoffzelleneinrichtung zur Verfügung gestellt wird. Dies wird im weiteren Verlauf noch verdeutlicht. Allerdings lässt sich der Trocknungsprozess auch "zwischendurch" realisieren, insbesondere unter Nutzung vorteilhafter Randbedingungen aus der Steuerung des Energiesystems und/oder aus dem aktuellen Energiebedarf des Haushaltes.

Vorzugsweise ist die Eingangsseite der Trocknungsbehältereinrichtung der Elektrolyseeinrichtung, und optional der Brennstoffzelleneinrichtung zugewandt. Die Ausgangsseite der Trocknungsbehältereinrichtung ist vorzugsweise der Speichereinrichtung für den Wasserstoff zugewandt.

Beispielsweise weist der Zugang der Trocknungsbehältereinrichtung für den von der Elektrolyseeinrichtung erzeugten Wasserstoff eine Schnittstelle zu der Elektrolyseeinrichtung auf, oder er ist als eine solche Schnittstelle ausgebildet. Alternativ oder zusätzlich weist der Abgang für den in der Trocknungsbehältereinrichtung getrockneten Wasserstoff eine Schnittstelle zu der Speichereinrichtung zum Speichern des erzeugten Wasserstoffs auf, oder er ist als eine solche Schnittstelle ausgebildet ist. Alternativ oder zusätzlich weist der Zugang der Trocknungsbehältereinrichtung für das Regenerationsmittel eine Schnittstelle zu der Speichereinrichtung zum Speichern des erzeugten Wasserstoffs auf, oder er ist als eine solche Schnittstelle ausgebildet. Alternativ oder zusätzlich weist der Abgang der Trocknungsbehältereinrichtung für das Regenerationsmittel eine Schnittstelle zu einer Brennstoffzelleneinrichtung und/oder zu einem Rekombinator und/oder zu einer Ableitung auf, oder er ist als eine solche Schnittstelle ausgebildet ist. In einem Rekombinator rekombiniert der Wasserstoff beispielsweise mit Luft, wobei Wärme entsteht, die für andere Prozesse genutzt werden kann.

Je nach Ausgestaltung können die einzelnen Zugänge und Abgänge jeweils als eigenständige, voneinander unabhängige Komponenten ausgebildet sein. In einer bevorzugten Ausführungsform ist realisieret, dass einzelne Zugänge und Abgänge gemeinschaftlich ausgebildet und genutzt werden. In einer bevorzugten Ausführungsform sind der Zugang für den von der Elektrolyseeinrichtung erzeugten Wasserstoff und der Abgang für das Regenerationsmittel als eine einzige Komponente ausgebildet. Alternativ oder zusätzlich sind in einer bevorzugten Ausführungsform der Abgang für den in der Trocknungsbehältereinrichtung getrockneten Wasserstoff und der Zugang für das Regenerationsmittel als eine einzige Komponente ausgebildet.

Der Trocknungsvorgang zeichnet sich insbesondere dadurch aus, dass eine saisonale Adsorption und Desorption des Trocknungsmittels erfolgen kann, beispielsweise in Anpassung an den Elektrolysebetrieb und den Brennstoffzellenbetrieb des Energiesystems. Je nach Ausführung, und insbesondere abhängig von der Wahl der Trocknungssubstanz und/oder der Trocknungsgüte, ist für den Regenerationsvorgang kein Zusatzenergiebedarf notwendig, etwa wenn der als Regenerationsmittel verwende Wasserstoff vollständig für den Betrieb der Brennstoffzellen genutzt wird und wenn auf eine Beschleunigung der Regeneration über eine Zufuhr thermischer Energie verzichtet wird.

Dies soll anhand eines Beispiels erläutert werden. Im Brennstoffzellenbetrieb, beispielsweise in der Winter-Saison, wird der im Elektrolysebetrieb, beispielsweise in der Sommer-Saison, getrocknete Wasserstoff genutzt, um das Trocknungsmittel in der Trocknungsbehältereinrichtung der Trocknereinrichtung zu regenerieren. Der getrocknete Wasserstoff wird im Brennstoffzellenbetrieb zumindest teilweise, vorzugsweise vollständig durch die Trocknungsbehältereinrichtung geleitet. Idealerweise, aber nicht zwingend erforderlich, wird das Trocknungsmittel dabei entgegen Strömungsrichtung im Elektrolysebetrieb durchströmt. Zur Optimierung der Regenerationsgeschwindigkeit und des erzielbaren Regenerationsgrades kann der Druck in der Trocknungsbehältereinrichtung im Brennstoffzellenbetrieb reduziert werden. Alternativ könnte auch die Temperatur leicht angehoben werden. Dies wird im weiteren Verlauf der Beschreibung noch näher erläutert.

Der Regenerationsprozess des Trocknungsmittels gemäß dem ersten Erfindungsaspekt zeichnet sich insbesondere durch folgende Komponenten aus. Es erfolgt eine Durchströmung, insbesondere im Gegenstrom, der Trocknungsbehältereinrichtung und des darin befindlichen Trocknungsmittels durch dieselbe Leitung. Adsorption und Desorption finden diskontinuierlich, das heißt nacheinander, statt. Während des Elektrolysebetriebs erfolgt die Adsorption, wohingegen während des Brennstoffzellenbetriebs die Desorption stattfindet.

Gemäß einer Ausführungsform sind der zu trocknende Wasserstoff und das Regenerationsmittel bei unterschiedlichen Druckniveaus durch die Trocknungsbehältereinrichtung führbar beziehungsweise geführt. Für die Trocknung/Adsorption und Regeneration/Desorption existieren somit unterschiedliche Druckniveaus. Insbesondere ist das Druckniveau während des Trocknungsvorgangs höher als das Druckniveau während des Regenerationsvorgangs.

Gemäß einer Ausführungsform ist die Trocknereinrichtung auch für eine Regeneration des Trocknungsmittels mittels einer Vakuumpumpe bereitgestellt. Diese Maßnahme erfolgt insbesondere zusätzlich zu der oben beschriebenen Regeneration unter Verwendung von bereits getrocknetem Wasserstoff. Die beiden Prozesse laufen insbesondere nacheinander ab. Zu diesem Zweck ist der Trocknereinrichtung mindestens eine Vakuumpumpe zugeordnet, die, insbesondere über ein Umschaltventil, mit der Trocknungsbehältereinrichtung oder mit dem Abgang für den in der Trocknungsbehältereinrichtung getrockneten Wasserstoff verbunden ist. Wenn die Trocknungsbehältereinrichtung einen Trocknungsbehälter aufweist, ist die Vakuumpumpe diesem Trocknungsbehälter zugeordnet. Wenn die Trocknungsbehältereinrichtung zwei oder mehr Trocknungsbehälter aufweist, ist gemäß einer Ausführungsform jedem Trocknungsbehälter eine Vakuumpumpe zugeordnet. In anderer Ausgestaltung kann ein Vakuumpumpe zwei oder mehr Trocknungsbehältern zugeordnet sein.

Beispielsweise kann die Vakuumpumpe zunächst den in der Trocknungsbehältereinrichtung befindlichen Wasserstoff absaugen. Entsprechend dem sinkenden Gesamtdruck im Behälter, der schließlich den Wasserdampfpartialdruck über der Trocknungssubstanz erreicht kann dann der im Trocknungsmittel befindliche Wasserdampf extrahiert werden. Vorzugsweise ist der Gesamtdruck, und damit auch der Partialdruck des Wassers in diesem Fall nahe Null. Eine deutliche Erhöhung des Wasserdampfpartialdruckes über der Trocknungssubstanz und damit eine deutlich effizientere Extraktion des in der Trocknungssubstanz gebundenen Wassers kann durch eine gleichzeitige Beheizung der Trocknungsbehältereinrichtung erfolgen. Damit sind auch einfachere und kostengünstigere Vakuumpumpen einsetzbar, die nur ein schlechteres Vakuum erzeugen können, beispielsweise 0,1 bis 0,2 bar Absolutdruck.

Diese Ausgestaltung des Energiesystems ermöglich ein regelmäßiges saisonunabhängiges Regenerieren des Trocknungsmittels durch Evakuierung der Trocknungsbehältereinrichtung mit einer Vakuumpumpe. Es wird insbesondere keine Zuschaltung der Brennstoffzelle, die den zunächst trockenen, stromauf dann befeuchteten Wasserstoff nutzt, in Zeiträumen benötigt, in denen aus Sicht der Energieversorgung kein Brennstoffzellenbetrieb nötig wäre.

Vorzugsweise ist die Vakuumpumpe weiterhin mit einer Ableitung oder einer Spüleinrichtung verbunden.

Vorzugsweise ist das Trocknungsmittel als ein Adsorbent, insbesondere in Form von Zeolith, Silicagel, oder Aluminiumoxid oder als ein Molsieb ausgebildet. Die Erfindung ist jedoch nicht auf diese genannten konkreten Ausführungsformen beschränkt.

Gemäß einer Ausführungsform weist die Trocknungsbehältereinrichtung einen einzigen Trocknungsbehälter auf. In dem Trocknungsbehälter befindet sich gemäß einer Ausführungsform ein einziges Trocknungsmittel. Gemäß einer anderen Ausführungsform befinden sich in dem Trocknungsbehälter zwei oder mehr unterschiedliche Trocknungsmittel, insbesondere getrennt voneinander.

Gemäß einer anderen Ausführungsform weist die Trocknungsbehältereinrichtung zwei oder mehr Trocknungsbehälter auf. Gemäß einer Ausführungsform sind die Trocknungsbehälter in Reihenschaltung, das heißt seriell, zueinander angeordnet. In diesem Fall werden die Trocknungsbehälter nacheinander durchströmt. In anderer Ausgestaltung sind die Trocknungsbehälter in Parallelschaltung zueinander angeordnet. In diesem Fall werden die Trocknungsbehälter gleichzeitig, oder aber bei Bedarf wahlweise, durchströmt. Gemäß einer Ausführungsform befindet sich in jedem Trocknungsbehälter wenigstens ein Trocknungsmittel, beispielsweise in der wie vorstehende zum einen Trocknungsbehälter beschriebenen Weise. Alternativ oder zusätzlich befinden sich in verschiedenen Trocknungsbehältern jeweils verschiedene Trocknungsmittel.

Die Trocknungsbehälter können jeweils gleich groß, aber auch unterschiedlich groß sein. Bei Verwendung mehrere Trocknungsbehälter können diese kleiner als nur ein einziger Trocknungsbehälter dimensioniert sein. Bevorzugt sind die Behälter in geringem Abstand voneinander platziert.

Gemäß einer Ausführungsform, anhand der die Erfindung nachfolgend des Öfteren beschrieben wird, um das Wesen der Erfindung zu verdeutlichen, ohne dass die Erfindung auf dieses Beispiel beschränkt ist, weist die Trocknungsbehältereinrichtung wenigstens zwei Trocknungsbehälter auf, die in Reihenschaltung zueinander, insbesondere in kurzen Abständen, angeordnet sind. Im ersten Trocknungsbehälter befindet sich ein erstes Trocknungsmittel, während sich im zweiten oder jedem weiteren Trocknungsbehälter ein zum ersten Trocknungsmittel unterschiedliches Trocknungsmittel befindet. In einer Ausführungsform weist die Trocknungsbehältereinrichtung genau zwei Trocknungsbehälter auf, wobei sich im ersten Trocknungsbehälter ein erstes Trocknungsmittel, beispielsweise Silicagel, befindet, während sich im zweiten Trocknungsbehälter ein zweites Trocknungsmittel, beispielsweise Zeolithe beziehungsweise Molsieb-Substanzen, befindet. Der erste Trocknungsbehälter, der insbesondere der Elektrolyseeinrichtung zugewandt ist, kann größer sein als der zweite Trocknungsbehälter, der der Speichereinrichtung zugewandt ist.

Gemäß dieser Ausführungsform werden, insbesondere gemäß dem ersten Aspekt der Erfindung, zwei oder mehr verschiedene Trocknungsmittel, das heißt Adsorbentien, in zwei oder mehr Trocknungsbehältern seriell durchströmt. Besonders vorteilhaft ist dies, wenn die Trocknungs- und Regenerationsparameter der mindestens zwei Trocknungsmittel deutlich unterschiedlich sind. Dies ist beispielsweise bei den für die Trocknung von Gasen üblichen Arten von Silicagel und Zeolithen beziehungsweise Molsieb-Substanzen der Fall. Silicagel desorbiert druck- und beladungsabhängig bereits bei vergleichsweise niedrigen Temperaturen von beispielsweise 20-70°C, während Zeolithe beziehungsweise Molsieb-Substanzen bei vergleichbarerem Druck und Beladungsgrad mit Wasser erst bei deutlich höheren Temperaturen von beispielsweise 100-300°C den Wasserdampf desorbieren beziehungsweise freisetzen. Mit Zeolithen oder Molsieben lassen sich andererseits die gewünschten sehr niedrigen Taupunkte bei der Trocknung noch bei höherem Beladungsgrad mit Wasser, also deutlich leichter erzielen, beispielsweise bis auf einen Taupunkt von -30°C oder niedriger. Beim Trocknungsvorgang wird in diesem Beispiel bevorzugt zunächst der, bevorzugt größere, Trocknungsbehälter mit Silicagel durchströmt und der bezüglich der zu speichernden Stoffmenge größere Anteil des Wassergehaltes entfernt. Im nachfolgenden, bevorzugt kleineren Trocknungsbehälter entfernt beispielsweise ein Zeolith den kleineren Rest des Wassergehaltes bis zum Taupunkt von beispielsweise -30°C bis -60°C. In der Desorptionsphase wird dann zunächst der kleinere Trocknungsbehälter mit Zeolith durchströmt, wobei der kleinere Trocknungsbehälter beispielsweise mittels einer Heizeinrichtung, etwa mittels beispielsweise elektrischer Beheizung, auf eine relativ hohe Temperatur von beispielsweise 100-200 °C gebracht wird und bei dieser Temperatur so lange gehalten wird, bis die Regeneration des Zeolithen in diesem Behälter abgeschlossen ist. Der nachfolgend durchströmte größere Trocknungsbehälter mit Silicagel kann dann gänzlich ohne Beheizung beispielsweise bei Raumtemperatur oder auch bei durch geeignete Beheizung bei nur leicht erhöhter Temperatur von beispielsweise 50°C, oder beheizt durch den aus dem ersten Trocknungsbehälter bereits mit höherer Temperatur austretenden Wasserstoff mit dann größerer Regenerationsrate betrieben und regeneriert werden. Insgesamt ist dann der Energieaufwand für die Beheizung zur Deckung der Abwärme und der Desorptionsenergie verkleinert und/oder die Regenerationszeit beider Trocknungsbehälter insgesamt verkürzt.

Vorzugsweise ist vor dem Zugang für den von der Elektrolyseeinrichtung erzeugten Wasserstoff ein Druckminderungsventil oder ein Absperrventil bereitgestellt.

Um nach einem Regenerationsvorgang die Trocknungsbehältereinrichtung erneut auf die für den Trocknungsprozess des vom der Elektrolyseeinrichtung erzeugten Wasserstoffs erforderlichen Prozessbedingungen zu bringen, ist in einer bevorzugten Ausführungsform eine die Trocknungsbehältereinrichtung, oder zumindest einzelne Trocknungsbehälter der Trocknungsbehältereinrichtung umgehende Bypassleitung bereitgestellt, in der insbesondere ein Druckaufbauventil angeordnet ist. Optional ist die Bypassleitung im oder vor dem Zugang für den von der Elektrolyseeinrichtung erzeugten Wasserstoff und im oder hinter dem Abgang für den in der Trocknungsbehältereinrichtung getrockneten Wasserstoff abgezweigt.

Vorzugsweise ist wenigstens eine Heizeinrichtung bereitgestellt, die zumindest einem Bereich der Trocknungsbehältereinrichtung und/oder zumindest einem Bereich von wenigstens einem Trocknungsbehälter der Trocknungsbehältereinrichtung und/oder dem Zugang für das Regenerationsmittel zugeordnet ist. Gemäß einer Ausführungsform wird über die Heizeinrichtung die Trocknungsbehältereinrichtung und/oder das darin befindliche Trocknungsmittel beheizt, nicht jedoch das die Trocknungsbehältereinrichtung durchströmende Regenerationsmittel. In einem solchen Fall ist die Trocknungsbehältereinrichtung und/oder wenigstens ein Trocknungsbehälter der Trocknungsbehältereinrichtung bevorzugt thermisch isoliert. Durch Beheizung kann die Trocknung weiter beschleunigt werden, denn geschwindigkeitsbestimmend ist hier der Partialdruckunterschied zwischen dem nun wärmeren Trocknungsmittel - dadurch steigt der beladungsabhängige Dampfdruck an der Adsorbensoberfläche - und dem Wasserstoffpartialdruck in der Wasserstoff-Kernströmung. Falls nicht beheizt wird, geht die Trocknungsrate mit sinkender Temperatur runter - es dauert länger, da die Energie zum Verdampfen/Trocknen dann aus der Umgebung kommen muss. Ohne Beheizung kann der Energieaufwand minimiert werden; dann ist die Trocknervorrichtung gegebenenfalls saisonal zu dimensionieren und benötigt eine lange Brennstoffzellen-Laufzeit.

Die Verwendung einer Heizeinrichtung ist beispielsweise dann von Vorteil, wenn die Trocknungsbehältereinrichtung schneller regeneriert als beladen werden soll.

Über die Heizeinrichtung kann beispielsweise eine elektrische Heizung und/oder eine Beheizung über heißes Gas, etwa über Abwärme realisiert werden, insbesondere eine Heizung von außen im Vergleich zur Trocknungsbehältereinrichtung.

Bevorzugt ist die Trocknereinrichtung derart bereitgestellt, dass die in der Trocknungsbehältereinrichtung, insbesondere in zumindest einzelnen Trocknungsbehältern der Trocknungsbehältereinrichtung herrschende Trocknungsgeschwindigkeit variierbar ist und/oder dass die in der Trocknungsbehältereinrichtung, insbesondere in zumindest einzelnen Trocknungsbehältern der Trocknungsbehältereinrichtung herrschende Regenerationsgeschwindigkeit variierbar ist. Die Regenerationsgeschwindigkeit ist insbesondere abhängig von der in der Trocknungsbehältereinrichtung beziehungsweise den Trocknungsbehältern herrschenden Temperatur und dem Gesamtdruck, sowie vom Volumenstrom des Trägergases, einstellbar durch Beheizung und Druckabsenkung während der Regeneration. In geringerem Maße hängt die Regenerationsgeschwindigkeit auch von der Strömungsgeschwindigkeit des Trägergases sowie von der Gleichverteilung der Strömungsgeschwindigkeit über den durchströmten Querschnitt ab. Beides wird begünstigt durch den Aufbau des Trocknungsbehälters mit möglichst kleinem Querschnitt und mit möglichst großer Länge.

Alternativ oder zusätzlich ist die Trocknereinrichtung derart bereitgestellt, dass die Feuchte des die Trocknungsbehältereinrichtung, insbesondere zumindest einzelne Trocknungsbehälter der Trocknungsbehältereinrichtung verlassenden Wasserstoffs variierbar oder einstellbar ist. Damit kann verhindert werden, dass der Wasserdampf auf dem Weg zur Brennstoffzelle kondensiert oder dass der Wasserstoff beim Eintritt in die Brennstoffzelle zu feucht ist. Beispielsweise kann zu diesem Zweck in einer bevorzugten Betriebsweise die elektrische Heizleistung eines Heizelements gemessen und/oder die Temperatur des Wasserstoffs während des Regenerationsvorgangs am Abgang aus der Trocknungsbehältereinrichtung gemessen werden und dann die Heizleistung und/oder die Temperatur begrenzt werden. Dies kann über eine Steuereinrichtung des Energiesystems ausgewertet und geregelt werden. Dies kann beispielsweise erfolgen, indem die gemessenen Werte mit einer in der Steuereinrichtung abgelegten Kennlinie verglichen werden. Eine direkte Messung des Feuchtegehalts des Wasserstoffs nach Austritt aus der Trocknereinrichtung und darauf basierend die anschließende Regelung der Heizleistung ist grundsätzlich ebenfalls möglich.

Grundsätzlich ausreichend ist es, wenn in dem oder jedem Trocknungsbehälter ein Trocknungsmittel angeordnet ist. Es können sich aber auch zwei oder mehr unterschiedliche Trocknungsmittel, insbesondere getrennt voneinander, in dem/den Trocknungsbehälter(n) befinden. Diese können je nach Ausgestaltung in gleichen oder in unterschiedlichen Mengen bereitgestellt sein. Vorzugsweise sind die Trocknungsmittel durch eine gasdurchlässige Trenneinrichtung voneinander getrennt. Wenn die Trocknereinrichtung eine Heizeinrichtung aufweist, kann beispielsweise realisiert sein, dass die Heizeinrichtung nur mit demjenigen Bereich des Trocknungsbehälters zusammenwirkt, in dem sich eines der Trocknungsmittel, beispielsweise ein bestimmtes Trocknungsmittel, befindet.

Zudem kann das Energiesystem weitere Komponenten umfassen. Beispielsweise kann das Energiesystem eine Lüftungseinrichtung aufweisen und/oder mit einer Wärmepumpeneinrichtung verbunden sein. Die Wärmepumpeneinrichtung ist bevorzugt als eine Luft-Wärmepumpe, insbesondere eine Abluft-Wärmepumpe, oder als eine Wasser-Wärmepumpe oder als eine Luft/Wasser-Wärmepumpe ausgebildet. Die Luft/Wasser-Wärmepumpe nutzt die thermische Energie der Luft. Hier wird die Wärme über die Luft transportiert. Wärmepumpen an sich sind im Stand der Technik bekannt und dem Fachmann geläufig.

Bei dem Energiesystem handelt es sich insbesondere um ein aus mehreren Komponenten bestehendes Ganzes, wobei die Komponenten miteinander zu einer zweckgebundenen Einheit verbunden sind. Im vorliegenden Fall handelt es sich bei dem Energiesystem um ein System zum Erzeugen beziehungsweise Bereitstellen von Energie, vorzugsweise von elektrischer Energie. Grundsätzlich ist die Erfindung nicht auf bestimmte Arten von Energiesystemen beschränkt.

In einer bevorzugten Ausführungsform handelt es sich bei dem Energiesystem um ein Gebäudeenergiesystem. Gebäudeenergiesysteme sind grundsätzlich aus dem Stand der Technik bekannt und dienen der Versorgung von Gebäuden, beispielsweise von Niedrigenergiehäusern, Passivhäusern oder Nullenergiehäusern, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen. Ein solches Gebäudeenergiesystem schafft die Grundlage dafür, dass der Energiebedarf eines Gebäudes, insbesondere eines Niedrigenergiehauses, eines Passivhauses oder eines Nullenergiehauses, sowohl hinsichtlich des Strom- als auch des Wärmebedarfs vollständig aus erneuerbaren Energiequellen gedeckt werden kann und somit vollständige COz-Freiheit im Betrieb besteht. Wenigstens aber kann der Strombedarf eines Gebäudes im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden.

Ein solches Gebäudeenergiesystem ist beispielsweise in den Patentanmeldungen WO 2017/089468 A1 und WO 2017/089469 A1 der Anmelderin offenbart und beschrieben, deren Offenbarungsgehalt in die Beschreibung der vorliegenden Patentanmeldung mit einbezogen wird.

Gemäß einer bevorzugten Ausführungsform weist ein Gebäudeenergiesystem der genannten Art die folgenden Grundmerkmale auf:
- einen DC-Einspeisepunkt, bevorzugt ausgebildet für eine Nenn-Spannung von 48 Volt oder für eine Nennspannung zwischen 200 und 1000 Volt und/oder einem AC-Einspeisepunkt, bevorzugt ausgebildet für eine Spannung von 230 Volt oder 110 Volt oder einer 3-phasigen Einspeisung bei pro Phase 230 Volt oder 110 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,
- einen elektrisch mit dem DC-Einspeisepunkt wenigstens zeitweise verbundenen PV-Generator zum Erzeugen einer elektrischen PV-Leistung,
- eine elektrisch mit dem DC-Einspeisepunkt oder mit dem AC-Einspeisepunkt wenigstens zeitweise verbundene Brennstoffzelleneinheit zum Erzeugen einer elektrischen Brennstoffzellen-Leistung,
- eine elektrisch mit dem DC-Einspeisepunkt oder mit dem AC-Einspeisepunkt verbundene Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,
- einen Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,
- eine Speicher-Batterieeinheit, insbesondere als Kurzzeitenergiespeicher, die elektrisch mit dem DC-Einspeisepunkt verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und
- ein Steuermodul zum Steuern der Hausenergieanlage.

Das Energiesystem kann als reines Innensystem aufgestellt werden und saugt die Luft im Aufstellraum an und gibt diese auch wieder in den selbigen ab. Das Energiesystem kann vorzugsweise auch mit einer zentralen Gebäuderaumlüftung verbunden sein, oder Bestandteil einer zentralen Gebäuderaumlüftung sein oder eine zentrale Gebäuderaumlüftung aufweisen.

Mit dem erfindungsgemäßen Energiesystem wurde die Möglichkeit geschaffen, die Abwärmen und eventuellen Wasseranteile entweder in die Abluft, die Zuluft, die Außenluft oder ungenutzt der Fortluft beizumischen, oder aber diese für weitere Prozesse zur Verfügung zu stellen. In der Abluftvariante besteht demzufolge die Möglichkeit auf einen separaten Abluftventilator zu verzichten. Diese Form des Energiesystems ist eine sogenannte Direktwärmenutzung, also beim Auftreten der Abwärme wird diese bedarfsgerecht direkt genutzt oder in die Fortluft geleitet.

Eine Erweiterung des Energiesystems stellt hierbei die Verwendung einer Wärmepumpe, insbesondere einer Luft-Wärmepumpe, dar. Hierbei handelt es sich insbesondere um eine Kältemaschine, mit umschaltbaren Wärmetauschern bei Dualbetrieb von Energiequellen aus gezielter Temperierung der Außenluft des Lüftungsgerätes oder der Verwendung von Außenluft und/oder Fortluft des Lüftungsgerätes. Dadurch besteht die zeitliche Entkopplung aus regenerativer Energiebereitstellung aus den Abwärmen der wirkungsgradbehafteten Elektrolyse oder der Brennstoffzelle, um diese Energiequellen zur Anhebung der Arbeitszahl der Kältemaschine sinnvoll zu nutzen und in einem Warmwasserspeicher und/oder Heizungspufferspeicher zwischen zu speichern. Dies wird als thermische, regenerative Kurzzeitspeicherung bezeichnet.

Bei einer Aussenluftverschaltung ist die Vorerwärmung der Außenluft zur Reduzierung der Auftaufunktion des Lüftungsgerätes ein Vorteil, bei Überwärme durch die Wasserstoffmodule können so auch bivalent die Abwärmen aus der gemischten Außenluft und parallel aus der gemischten Fortluft des Lüftungsgerätes in Warmwasserspeichern/Heizungspufferspeichern bedarfsgerecht gespeichert werden.

Gemäß dem zweiten Aspekt der Erfindung wird ein Verfahren zum Regenerieren eines in einer Trocknungsbehältereinrichtung einer Trocknereinrichtung befindlichen Trocknungsmittels in einem Energiesystem, bereitgestellt, welches die Merkmale des unabhängigen Patentanspruchs 11 aufweist. In einer bevorzugten Ausführungsform ist das Energiesystem gemäß dem ersten Aspekt der Erfindung ausgestaltet, so dass zur Beschreibung und Ausgestaltung des Verfahrens an dieser Stelle auch auf die Beschreibung zum ersten Erfindungsaspekt weiter oben sowie auf die allgemeine Beschreibung der Erfindung vollinhaltlich Bezug genommen und verwiesen wird.

Das dem Verfahren gemäß dem zweiten Aspekt der Erfindung zugrunde liegende Energiesystem weist eine Elektrolyseeinrichtung zur Erzeugung von Wasserstoff, optional eine Brennstoffzelleneinrichtung, eine Speichereinrichtung zum Speichern des erzeugten Wasserstoffs, sowie eine Trocknereinrichtung zum Trocknen des in der Elektrolyseeinrichtung erzeugten Wasserstoffs auf, wobei die Trocknereinrichtung eine Trocknungsbehältereinrichtung aufweist, in der sich mindestens eine Art eines Trocknungsmittels befindet, wobei die Trocknungsbehältereinrichtung eine Eingangsseite und eine Ausgangsseite aufweist, wobei die Eingangsseite der Trocknungsbehältereinrichtung einen Zugang für den von der Elektrolyseeinrichtung erzeugten Wasserstoff aufweist, und wobei die Ausgangsseite der Trocknungsbehältereinrichtung einen Abgang für den in der Trocknungsbehältereinrichtung getrockneten Wasserstoff aufweist.

Erfindungsgemäß ist das Verfahren gemäß dem zweiten Aspekt der Erfindung durch folgende Schritte gekennzeichnet:
Insbesondere wird der Wasserstoff in einer ersten Strömungsrichtung durch die Trocknungsbehältereinrichtung geführt. Gemäß einer Verfahrensvariante ist dieser Schritt Bestandteil des Verfahrens. Das heißt, das Beladen des Trocknungsmittels, während der feuchte Wasserstroff durch die Trocknungsbehältereinrichtung geführt wird, ist Bestandteil des Verfahrens. Gemäß einer anderen Verfahrensvariante ist dieser Schritt nicht Bestandteil des Verfahrens. In diesem Fall setzt das Verfahren erst ein, nachdem der noch feuchte Wasserstoff durch die Trocknungsbehältereinrichtung geführt und das Trocknungsmittel beladen wurde.

Das Trocknungsmittel wird regeneriert, in dem während des Regenerationsvorgangs ein Regenerationsmittel in Form von getrocknetem Wasserstoff in die Trocknungsbehältereinrichtung eintritt, beispielsweise über einen Zugang für das Regenerationsmittel, in einer von der ersten Strömungsrichtung des Wasserstoffs durch die Trocknungsbehältereinrichtung abweichenden zweiten Strömungsrichtung durch die Trocknungsbehältereinrichtung geführt wird, diese und das darin befindliche Trocknungsmittel, insbesondere im Gegenstrom, durchströmt und dabei das Regenerationsmittel regeneriert. Anschließend kann das Regenerationsmittel die Trocknungsbehältereinrichtung über einen Abgang für das Regenerationsmittel verlassen.

Vorzugsweise wird das Regenerationsmittel in Form des getrockneten Wasserstoffs aus der Speichereinrichtung zum Speichern des erzeugten Wasserstoffs entnommen. Anschließend wird das Regenerationsmittel durch die Trocknungsbehältereinrichtung, insbesondere vollständig, geleitet. Das Regenerationsmittel kann nach Verlassen der Trocknungsbehältereinrichtung einer Brennstoffzelleneinrichtung und/oder einem Rekombinator und/oder einer Ableitung zugeführt werden.

Gemäß einer Ausführungsform werden der Wasserstoff und das Regenerationsmittel bei unterschiedlichen Druckniveaus durch die Trocknungsbehältereinrichtung geführt.

Vorzugsweise wird das Verfahren in der Brennstoffzellenphase des Energiesystems durchgeführt. Alternativ oder zusätzlich wird das Verfahren zumindest zeitweilig in der Elektrolysephase des Energiesystems durchgeführt.

Gemäß einer Ausführungsform ist das Verfahren dadurch gekennzeichnet, dass das Trocknungsmittel zusätzlich regeneriert wird, indem die Trocknungsbehältereinrichtung, insbesondere regelmäßig, mittels einer Vakuumpumpe evakuiert wird, die, insbesondere über ein Umschaltventil, mit dem Abgang für den in der Trocknungsbehältereinrichtung getrockneten Wasserstoff verbunden ist.

Vorzugsweise evakuiert die Vakuumpumpe nach ihrer Aktivierung die Trocknungsbehältereinrichtung, insbesondere zumindest einzelne Trocknungsbehälter der Trocknungsbehältereinrichtung, indem darin befindlicher Wasserstoff und im Trocknungsmittel befindlicher Wasserdampf aus der Trocknungsbehältereinrichtung beziehungsweise dem/den Trocknungsbehälter(n) entfernt und, optional, anschließend einer Ableitung oder einer Spüleinrichtung zugeführt wird.

In Anlehnung an die im Zusammenhang mit dem erfindungsgemäßen Erfindungssystem beschriebene Ausgestaltung der Trocknungsbehältereinrichtung, auf deren Offenbarung an dieser Stelle zur Vermeidung von Wiederholungen vollinhaltlich Bezug genommen und verwiesen wird, kann das Verfahren gemäß verschiedener Ausführungsformen wie folgt ausgestaltet sein:
Gemäß einer Ausführungsform, bei der die Trocknungsbehältereinrichtung einen einzigen Trocknungsbehälter aufweist, in dem sich zwei oder mehr unterschiedliche Trocknungsmittel, insbesondere getrennt voneinander, befinden, ist das Verfahren dadurch gekennzeichnet, dass die Trocknung unter Nutzung der unterschiedlichen Adsorptionskennlinien der unterschiedlichen Trocknungsmittel erfolgt.

Gemäß einer Ausführungsform, bei der die Trocknungsbehältereinrichtung zwei oder mehr Trocknungsbehälter aufweist, die in Reihenschaltung oder in Parallelschaltung zueinander angeordnet sind, wobei sich in jedem Trocknungsbehälter wenigstens ein Trocknungsmittel befindet, und/oder wobei sich in verschiedenen Trocknungsbehältern verschiedene Trocknungsmittel befinden, ist das Verfahren dadurch gekennzeichnet, dass die Trocknung unter Nutzung der unterschiedlichen Adsorptionskennlinien der unterschiedlichen Trocknungsmittel erfolgt.

Gemäß einer Ausführungsform, bei der die Trocknungsbehältereinrichtung zwei Trocknungsbehälter aufweist, die in Reihenschaltung zueinander angeordnet sind, wobei sich im ersten Trocknungsbehälter ein erstes Trocknungsmittel befindet, und wobei sich in den weiteren Trocknungsbehältern ein zum ersten Trocknungsmittel unterschiedliches Trocknungsmittel befindet, ist das Verfahren dadurch gekennzeichnet, dass die Trocknung unter Nutzung der unterschiedlichen Adsorptionskennlinien der unterschiedlichen Trocknungsmittel erfolgt.

Vorzugsweise wird die Temperatur der Trocknungsbehältereinrichtung oder wenigstens eines Trocknungsbehälters und insbesondere wenigstens eines Trocknungsmittels, und/oder die Temperatur des Zugangs für das Regenerationsmittel, während des Regenerationsvorgangs mittels wenigstens einer Heizeinrichtung, zumindest zeitweilig und/oder bereichsweise, variiert, insbesondere erhöht.

Vorzugsweise wird während der Regenerationsvorgangs der Druck in der Trocknungsbehältereinrichtung, insbesondere in zumindest einzelnen Trocknungsbehältern der Trocknungsbehältereinrichtung variiert, insbesondere reduziert. Alternativ oder zusätzlich wird vorzugsweise während des Regenerationsvorgangs die in der Trocknungsbehältereinrichtung, insbesondere in zumindest einzelnen Trocknungsbehältern der Trocknungsbehältereinrichtung herrschende Trocknungsgeschwindigkeit variiert. Alternativ oder zusätzlich wird vorzugsweise während des Regenerationsvorgangs die in der Trocknungsbehältereinrichtung, insbesondere in zumindest einzelnen Trocknungsbehältern der Trocknungsbehältereinrichtung herrschende Regenerationsgeschwindigkeit variiert. Alternativ oder zusätzlich wird vorzugsweise während des Regenerationsvorgangs die Feuchte des die Trocknungsbehältereinrichtung, insbesondere zumindest einzelne Trocknungsbehälter der Trocknungsbehältereinrichtung durchströmenden Wasserstoffs variiert. Alternativ oder zusätzlich wird vorzugsweise während des Regenerationsvorgangs der Regenerationsgrad des in der Trocknungsbehältereinrichtung, insbesondere in zumindest einzelnen Trocknungsbehältern der Trocknungsbehältereinrichtung befindlichen Trocknungsmittels variiert. Hinsichtlich der vorgenannten Verfahrensvarianten wird ebenfalls vollinhaltlich auf die entsprechenden Ausführungen zu den erfindungsgemäßen Energiesystemen vollinhaltlich Bezug genommen und verwiesen.

Wenn sich im Betrieb der Trocknereinrichtung zeigt, dass die Aufnahmekapazität der Trocknereinrichtung vorzeitig erreicht wird, kann das Regenerationsverfahren früher gestartet werden und zumindest eine partielle Regeneration mit Brennstoffzellenbetrieb realisiert werden. Hierbei ist die Option der Beheizung der Trocknereinrichtung besonders vorteilhaft, da die Trocknungsrate damit deutlich gesteigert werden kann und eine längere wasserstoffverbrauchende Laufzeit der Brennstoffzelle vermieden werden kann. Eine Regeneration beispielsweise noch im Sommer, bei Überschuss an regenerativer Energie, beispielsweise PV-Energie, ist besonders vorteilhaft.

Durch die erfindungsgemäße Ausgestaltung des Energiesystems kann gegebenenfalls auf weitere, ansonsten erforderliche Komponenten, wie beispielsweise Gaskühler oder Wasserabscheider, verzichtet werden.

Im Idealfall kann das Wartungsintervall/Serviceintervall für die Trocknereinrichtung entfallen, da kein Tausch der Trocknungsbehälter der Trocknungsbehältereinrichtung beziehungsweise des/der Trocknungsmittel(s) mehr notwendig ist. Das regelmäßige notwendige Trocknen des Trocknungsmittels kann automatisiert ohne Servicepersonal vor Ort erfolgen, beispielsweise immer für einige Minuten nach Abschaltung der Elektrolyseeinrichtung, beispielsweise am Abend. Dies kann insbesondere bei einem Energiesystem gemäß dem zweiten Aspekt der Erfindung realisiert werden/sein. Oder aber die Trocknung des Trocknungsmittels erfolgt saisonal, beispielsweise in der Brennstoffzellensaison. Dies kann insbesondere bei einem Energiesystem gemäß dem ersten Aspekt der Erfindung realisier werden/sein.

Wird beispielsweise ein großer Trocknungsbehälter mit einer großen Menge an Trocknungsmittel verwendet, reicht möglicherweise eine saisonale Regeneration des Trocknungsmittels aus, beispielsweise während des Brennstoffzelleneibetriebs des Energiesystems. Bei kleineren Trocknungsbehältern mit weniger Trocknungsmittel muss die Regeneration möglicherweise öfter durchgeführt werden.

Ein Trocknen kann beispielsweise auch im Elektrolysemodus bei hohem Druck, ohne Energiezufuhr, erfolgen.

Das Regenerieren im Brennstoffzellen-Modus kann bei nahe Umgebungsdruck erfolgen. Dadurch ist eine bis zu zwanzigfache Aufnahmefähigkeit des Wasserstoffs bei vergleichbarem Volumenstrom und vergleichbarer Temperatur wie beim Elektrolysebetrieb möglich. Optional ist eine Regeneration vor Saisonende durch Brennstoffzellenbetrieb plus Beheizung, vorzugsweise im Sommer, möglich, sobald die sobald die Speichereinrichtungen mit Wasserstoff gefüllt sind.

Die Erfindung wird nun anhand verschiedener Ausführungsbeispiele unter Bezugnahme auf die beiliegenden Zeichnungen näher erläutert. Es zeigen
- Figur 1: in schematischer Ansicht ein Energiesystem, in dem die vorliegende Erfindung realisiert ist;
- Figur 2: in schematischer Ansicht ein erstes Ausführungsbeispiel einer Trocknereinrichtung mit einer Trocknungsbehältereinrichtung mit einem Trocknungsbehälter;
- Figur 3: in schematischer Ansicht ein zweites Ausführungsbeispiel einer Trocknereinrichtung mit einer Trocknungsbehältereinrichtung mit zwei Trocknungsbehältern;
- Figur 4: in schematischer Ansicht ein drittes Ausführungsbeispiel einer Trocknereinrichtung;
- Figur 5: in schematischer Ansicht ein viertes Ausführungsbeispiel einer Trocknereinrichtung;
- Figur 6: in schematischer Ansicht ein fünftes Ausführungsbeispiel einer Trocknereinrichtung; und
- Figur 7: in schematischer Ansicht ein sechstes Ausführungsbeispiel einer Trocknereinrichtung.

In Figur 1 wird zur Verdeutlichung des Hintergrunds der vorliegenden Erfindung und zur Einbettung der Erfindung in einem Energiesystem zunächst ganz allgemein ein Energiesystem 10 vorgestellt und beschrieben, in dem die vorliegende Erfindung verwirklicht ist.

Gemäß Figur 1 weist das Energiesystem 10 zunächst ein erstes Untersystem 20 auf, welches als Innensystem ausgebildet ist. Das bedeutet, dass sich das erste Untersystem 20 innerhalb des Gebäudes befindet. Zusätzlich weist das Energiesystem 10 ein zweites Untersystem 30 in Form eines Außensystems auf. Das bedeutet, dass sich das zweite Untersystem 30 außerhalb des Gebäudes befindet.

Das erste Untersystem 20 weist eine Elektrolyseeinrichtung 21 zur Herstellung von Wasserstoff auf. Zudem weist das erste Untersystem 20 eine Brennstoffzelleneinrichtung 22 auf.

Das zweite Untersystem 30 weist eine Hochdruckspeichereinrichtung 31 auf. In der Hochdruckspeichereinrichtung 31 wird der erzeugte Wasserstoff bei bis zu 700 bar gespeichert. Zusätzlich verfügt das zweite Untersystem 30 über eine Mitteldruckspeichereinrichtung 32, in der der erzeugte Wasserstoff bei Drücken zwischen 20 und 60 bar zwischengespeichert wird, bevor er von dort endgültig in der Hochdruckspeichereinrichtung 31 gespeichert wird.

Die einzelnen Komponenten des Energiesystems 10 sind über eine Verbindungsleitungseinrichtung 40 miteinander verbunden, die aus einer Anzahl unterschiedlicher Leitungsabschnitte 40a bis 40k besteht.

Zum Spülen der Elektrolyseeinrichtung 21 und/oder der Brennstoffzelleneinrichtung 22 ist eine Spüleinrichtung 23 mit einer Spülkammer vorgesehen, die über einen Leitungsabschnitt 40g mit den beiden vorgenannten Komponenten verbunden ist.

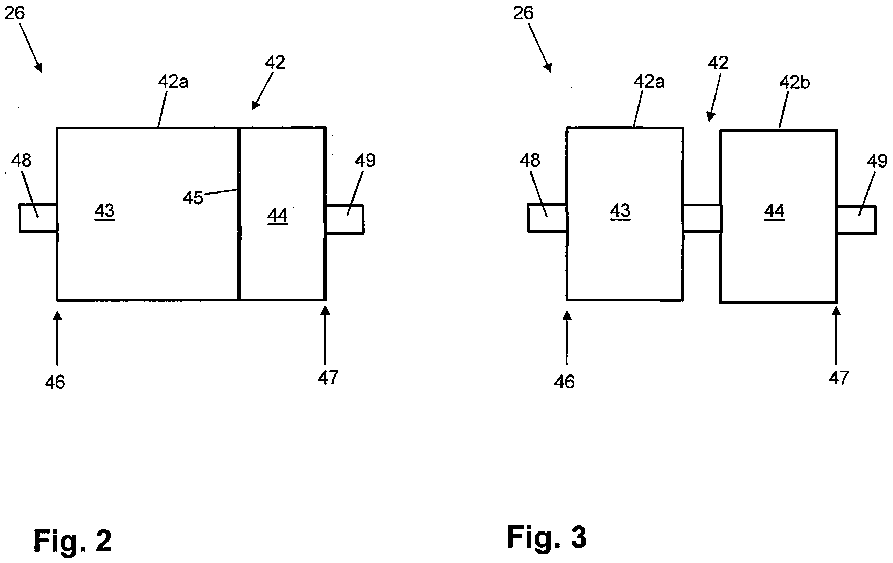

Der in der Elektrolyseeinrichtung 21 mittels Elektrolyse hergestellte Wasserstoff verlässt die Elektrolyseeinrichtung 21 über einen Leitungsabschnitt 40f, welcher in den Leitungsabschnitt 40e übergeht. In den beiden Leitungsabschnitten 40f und 40e befinden sich in Strömungsrichtung des erzeugten Wasserstoffs eine Rückschlagventileinrichtung 24 sowie nachfolgend eine Filtereinrichtung 25 und eine Trocknereinrichtung 26, in denen der erzeugte Wasserstoff gefiltert und getrocknet wird. Die Filtereinrichtung 25 und die Trocknereinrichtung 26 können sich alternativ auch im zweiten Untersystem 30 befinden. Die Trocknereinrichtung 26 und deren Regeneration wird weiter unten im Zusammenhang mit den Figuren 2 bis 6 im Detail beschrieben.

Von der Trocknereinrichtung 26 strömt der erzeugte Wasserstoff über die Leitungsabschnitte 40a und 40c zu einer weiteren Rückschlagventileinrichtung 35, welche ein Ende des Leitungsabschnitts 40c markiert. Von dort strömt der erzeugte Wasserstoff über einen Leitungsabschnitt 40h sowie 40i in den Mitteldruckspeicher 32, welcher über eine Ventileinrichtung 33, die insbesondere als Sperrventil, beispielsweise in Form eines Magnetventils, ausgebildet ist, an einem weiteren Leitungsabschnitt 40j angebunden ist. In dem Leitungsabschnitt 40j, der in der Hochdruckspeichereinrichtung 31 endet, befindet sich vor der Hochdruckspeichereinrichtung 31 eine Kompressoreinrichtung 34, insbesondere in Form eines Kolbenkompressors. Über die Kompressoreinrichtung 34 wird der erzeugte Wasserstoff in die Hochdruckspeichereinrichtung 31 eingespeichert. Der in der Mitteldruckspeichereinrichtung 32 zwischengespeicherte Wasserstoff wird unter Betätigung der Kompressoreinrichtung 34 in der Hochdruckspeichereinrichtung 31 eingespeichert.

Dieser Herstellungsvorgang des Wasserstoffs bis hin zu dessen Einspeicherung in der Hochdruckspeichereinrichtung 31 stellt eine erste Betriebsweise des Energiesystems 10 dar. Bei dieser ersten Betriebsweise des Energiesystems 10 herrscht in den Leitungsabschnitten 40a bis 40e der Verbindungsleitungseinrichtung 40 ein Druck von 20 bis 60 bar. Ein solcher Druck herrscht auch im Mitteldruckspeicher 32. Über die Kompressoreinrichtung 34 wird der aus der Mitteldruckspeichereinrichtung 32, bei der es sich um einen Zwischenspeicher handelt, entnommene Wasserstoff so weit komprimiert, dass er mit Drücken von bis zu 700 bar in der Hochdruckspeichereinrichtung 31 eingespeichert werden kann.

Der in der Hochdruckspeichereinrichtung 31 gespeicherte Wasserstoff wird für den Betrieb der Brennstoffzelleneinrichtung 22 verwendet. Der Betrieb der Brennstoffzelleneinrichtung 22 erfolgt in der zweiten Betriebsweise des Energiesystems 10. Die Brennstoffzelleneinrichtung 22 kann aber nur bei Drücken kleiner 20 bar arbeiten. In der zweiten Betriebsweise des Energiesystems 10 wird der Wassersoff über einen Leitungsabschnitt 40k aus der Hochdruckspeichereinrichtung 31 entnommen, über eine Entspannungseinrichtung 36 in Form eines Druckminderers auf den erforderlichen Druck entspannt und über einen Leitungsabschnitt 40d in den bidirektionalen Leitungsabschnitt 40a transportiert, von wo aus er über den Leitungsabschnitt 40b in die Brennstoffzelleneinrichtung 22 eintritt. Zur Messung des Drucks ist wenigstes eine Druckmesseinrichtung 41, beispielsweise in Form eines Drucksensors vorgesehen.

Der Betrieb der Brennstoffzelleneinrichtung 22 erfordert zudem die Zufuhr von Luft. Diese dient zum einen als Reaktand, vorzugsweise gleichzeitig auch zur Kühlung. Ähnliches gilt auch für die Elektrolyseeinrichtung 21. Denn beim Betrieb der Brennstoffzelleneinrichtung 22 und der Elektrolyseeinrichtung 21 entsteht Wärme, die in Form von Abwärme abgeführt und für weitere Prozesse genutzt werden kann.

Das in Figur 1 dargestellte Energiesystem 10 stellt einen Teilbereich eines Gesamt-Gebäudeenergiesystems dar, bei dem es sich um ein elektrisch autarkes und vollständig auf erneuerbaren Energien beruhendes multihybrides Gebäudeenergiespeichersystem handelt.

Das multihybride Gebäudeenergiespeichersystem ermöglicht es, die von einer Photovoltaik (PV)-Anlage, einer Kleinwindkraftanlage oder dergleichen erzeugte elektrische Energie bedarfsgesteuert auf das gesamte Jahr zu verteilen. Dabei kann das System als Inselsystem unabhängig vom elektrischen Netz oder aber bei Netzausfällen als Ersatzstromversorgung betrieben werden. Die Anlage kann auch die elektrische Autarkie des Gebäudes gewährleisten, sodass über das ganze Jahr hinweg keine elektrische Energie aus dem Stromnetz bezogen werden muss.

Die primäre Aufgabe des Gebäudeenergiesystems ist es, die gewonnene elektrische Energie aus Photovoltaik (PV)-Modulen oder dergleichen dem Verbraucher im Gebäude verfügbar zu machen. Sekundär können bei Zeiten niedriger Last oder hoher Einstrahlung elektrische Energieüberschüsse in einem Batterie-Kurzzeit-Speicher zwischengespeichert werden. Tertiär kann im Wasserstoff-Langzeit-Speicher die elektrische Energie als gasförmiger Wasserstoff für Zeiten niedriger Einstrahlung wie Nacht, Winter oder dergleichen mittel- bis langfristig gespeichert und mittels Brennstoffzelle wieder jederzeit bedarfsgerecht zur Verfügung gestellt werden.

Neben energietechnischen Aufgaben fungiert das System auch als kontrollierte Raumlüftung durch eine verbaute Lüftungseinrichtung 100. Bei Brennstoffzellenbetrieb kann die Abwärme des Brennstoffzellenmoduls über die kontrollierte Raumlüftung direkt als Wärme an die Frischluft und damit an die Räume abgegeben werden.

Der in der Elektrolyseeinrichtung 21 produzierte Wasserstoff fließt über die Wasserstoffleitung in die außenaufgestellte Druckspeicheranlage.

Bei fehlender oder nicht ausreichender PV-Energie wird Energie aus der Batterie zur Deckung der Verbraucherlast entnommen. Reicht die im Kurzzeitspeicher vorrätige Energie nicht aus, kann die Brennstoffzelleneinrichtung 22 den zusätzlichen elektrischen Energiebedarf decken. Im Brennstoffzellenbetrieb fließt der Wasserstoff über die Wasserstoffleitung aus der Druckspeicheranlage zur Brennstoffzelleneinrichtung 22.

Das gesamte System wird über ein zentrales elektronisches Steuergerät, den "Energy Manager" mit einem prädiktiven Energiemanagement derart gesteuert, dass übers Jahr gesehen der Nutzungsgrad der regenerativen Energie, z.B. PV-Energie und/oder Windenergie, bei minimaler Größe der installierten Energiewandler und Energiespeicher optimiert wird.

Das zweite Untersystem 30 ist prinzipiell für den Betrieb im Außenbereich vorgesehen, kann aber unter bestimmten Bedingungen auch innerhalb eines speziellen Bereichs des Gebäudes errichtet und betrieben werden.

Das Energiesystem 10 kann zur effektiven Nutzung einzelner Komponenten oder zur Weiterverwertung einzelner Prozessprodukte mit anderen Systemen oder Teilsystemen verbunden sein. Bei einem dieser weiteren Systeme handelt es sich beispielsweise um eine Lüftungseinrichtung 100. Oder aber es handelt sich um eine Wärmepumpeneinrichtung 200.

In Figur 2 ist ein erstes Ausführungsbeispiel für eine Trocknungsbehältereinrichtung 42 der Trocknereinrichtung 26 dargestellt, wie sie im Zusammenhang mit der Erfindung zum Einsatz kommen kann. Gemäß dieser Ausführungsform weist die Trocknungsbehältereinrichtung 42 einen einzigen Trocknungsbehälter 42a auf. Der Trocknungsbehälter 42a weist eine Eingangsseite 46 auf, in der ein Zugang 48 ausgebildet ist, oder die mit einem Zugang 48 zusammenwirkt. Ebenso weist der Trocknungsbehälter 42a eine Ausgangsseite 47 auf, in der ein Abgang 49 ausgebildet ist, oder die mit einem Abgang 49 zusammenwirkt. In dem Trocknungsbehälter 42a befindet sich wenigstens ein Trocknungsmittel. Gemäß Figur 2 weist der Trocknungsbehälter 42a zwei unterschiedliche Trocknungsmittel 43, 44 auf, die in unterschiedlichen Mengen vorhanden sind. Getrennt sind die Trocknungsmittel 43, 44 durch eine gasdurchlässige Trenneinrichtung 45, beispielsweise eine Trennwand. Bei einem Trocknungsmittel 43 handelt es sich beispielsweise um Silicagel. Bei dem anderen Trocknungsmittel 44 handelt es sich beispielsweise um Zeolith oder eine andere Molsieb-Substanz. In anderer Ausführungsform kann in dem Trocknungsbehälter 42a natürlich auch nur ein einziges Trocknungsmittel vorhanden sein. Der in der Elektrolyseeinrichtung 21 (siehe Figur 1) erzeugte, noch feuchte Wasserstoff tritt über den Zugang 48 in den Trocknungsbehälter 42a ein und durchströmt diesen. Im Wasserstoff befindliche Feuchtigkeit wird von den Trocknungsmitteln 43, 44 adsorbiert, wodurch der Wasserstoff getrocknet wird. Der getrocknete Wasserstroff verlässt den Trocknungsbehälter 42a über den Abgang 49 in Richtung der Speichereinrichtung 31, 32 (siehe Figur 1).

In Figur 3 ist ein zweites Ausführungsbeispiel für eine Trocknungsbehältereinrichtung 42 der Trocknereinrichtung 26 dargestellt, wie sie im Zusammenhang mit der Erfindung zum Einsatz kommen kann. Gemäß dieser Ausführungsform weist die Trocknungsbehältereinrichtung 42 zwei Trocknungsbehälter 42a, 42b auf, die in Reihe geschaltet sind und seriell durchströmt werden. Der erste Trocknungsbehälter 42a weist eine Eingangsseite 46 der Trocknereinrichtung 26 auf, in der ein Zugang 48 ausgebildet ist, oder die mit einem Zugang 48 zusammenwirkt. Der zweite Trocknungsbehälter 42b weist eine Ausgangsseite 47 der Trocknereinrichtung 26 auf, in der ein Abgang 49 ausgebildet ist, oder die mit einem Abgang 49 zusammenwirkt. In dem ersten Trocknungsbehälter 42a befindet sich ein erstes Trocknungsmittel 43. Bei dem ersten Trocknungsmittel 43 handelt es sich beispielsweise um Silicagel. In dem zweiten Trocknungsbehälter 42b befindet sich ein zweites Trocknungsmittel 44. Bei dem zweiten Trocknungsmittel 44 handelt es sich beispielsweise um Zeolith oder eine andere Molsieb-Substanz. Der erste Trocknungsbehälter 42a ist beispielsweise größer als der zweite Trocknungsbehälter 42b. Der in der Elektrolyseeinrichtung 21 (siehe Figur 1) erzeugte, noch feuchte Wasserstoff tritt über den Zugang 48 in den ersten Trocknungsbehälter 42a ein und durchströmt diesen. Im Wasserstoff befindliche Feuchtigkeit wird vom Trocknungsmittel 43 adsorbiert, wodurch der Wasserstoff getrocknet wird. Aus dem ersten Trocknungsbehälter 42 tritt der nun angetrocknete Wasserstoff in den zweiten Trocknungsbehälter 42b mit dem zweiten Trocknungsmittel 44 ein, wo er weiter getrocknet wird. Der getrocknete Wasserstroff verlässt den zweiten Trocknungsbehälter 42b über den Abgang 49 in Richtung der Speichereinrichtung 31, 32 (siehe Figur 1).

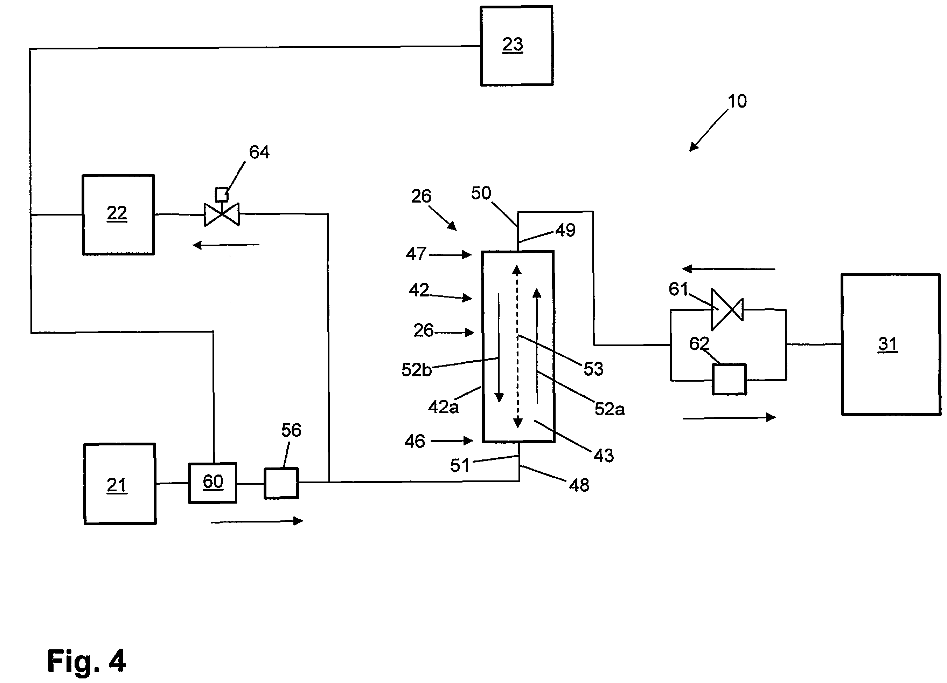

Figur 4 zeigt ein drittes Ausführungsbeispiel, bei dem eine Regeneration des Trocknungsmittels 43 mittels eines Regenerationsmittels in Form von getrocknetem Wasserstoff erfolgt.

Die Trocknereinrichtung 26 ist Bestandteil des Energiesystem 10, das zunächst eine Elektrolyseeinrichtung 21 zur Erzeugung von Wasserstoff, eine Speichereinrichtung 31, 32, bestehend aus Hochdruckspeicher und Mitteldruckspeicher für den erzeugten Wasserstoff, sowie eine Brennstoffzelleneinrichtung 22 aufweist.

Die Trocknereinrichtung 26 weist eine Trocknungsbehältereinrichtung 42 mit einem Trocknungsbehälter 42a mit einer Eingangsseite 46 und einer Ausgangsseite 47 auf. In dem Trocknungsbehälter 42a befindet sich ein Trocknungsmittel 43. Der Trocknungsbehälter kann aber auch wie in Figur 2 oder 3 dargestellt ausgebildet sein.

Der in der Elektrolyseeinrichtung 21 erzeugte, noch feuchte Wasserstoff durchströmt einen Gaskühler 60 und ein Rückschlagventil 56 bevor er über den Zugang 48 eintrittsseitig in den Trocknungsbehälter 42a der Trocknungsbehältereinrichtung 42 eintritt und diesen in einer ersten Strömungsrichtung 52a durchströmt. Die Funktion des Rückschlagventils kann alternativ auch über ein Druckhalteventil, ein Überströmventil oder ein Elektromagnet-Absperrventil realisiert werden. Durch das Trocknungsmittel 43 wird der Wasserstoff getrocknet. Austrittseitig verlässt der getrocknete Wasserstoff den Trocknungsbehälter 42a über einen Abgang 49 und wird über ein Rückschlagventil 61 in der Speichereinrichtung 31, 32 eingespeichert.

Aufgrund der Trocknungsprozedur nimmt das Trocknungsmittel 43 im Trocknungsbehälter 42a Feuchtigkeit auf und muss deshalb von Zeit zu Zeit regeneriert, das heißt getrocknet werden. Dies geschieht mit Hilfe des getrockneten und in der Speichereinrichtung 31,32, insbesondere in der Speichereinrichtung 31, gespeicherten Wasserstoffs, der die Funktion des Regenerationsmittels übernimmt.

Zu Regenerationszwecken wird der getrocknete Wasserstoff der Speichereinrichtung 31, 32, insbesondere der Speichereinrichtung 31, entnommen, durchströmt ein Druckminderungsventil 62, mit dem der Volumenstrom eingestellt werden kann, und tritt über einen Zugang 50 in den Trocknungsbehälter 42a ein. Im gezeigten Beispiel sind der Abgang 49 und der Zugang 50 als eine einzige Komponente ausgebildet. Das Regenerationsmittel durchströmt den Trocknungsbehälter 42a in einer von der ersten Strömungsrichtung 52a abweichenden zweiten Strömungsrichtung 52b, hier in entgegengesetzter Richtung. Der Strömungsweg des Wasserstoffs verläuft im Vergleich zum Strömungsweg des Regenationsmittels in bidirektionaler Richtung 53. Das Regenerationsmittel nimmt Feuchtigkeit aus dem Trocknungsmittel 43 auf, wodurch dieses getrocknet wird. Dabei wird das Regenerationsmittel angefeuchtet, bevor es den Trocknungsbehälter 42a und damit die Trocknungsbehältereinrichtung 42, ausgangsseitig über den Abgang 51 verlässt. Im gezeigten Beispiel sind der Abgang 51 und der Zugang 48 als eine einzige Komponente ausgebildet. Anschließend kann das Regenerationsmittel, bei dem es sich um Wasserstoff handelt, der Brennstoffzelleneinrichtung 22 zur Verfügung gestellt werden. Angefeuchteter Wasserstoff ist für die Brennstoffzelleneinrichtung 22 durchaus von Vorteil. Um eine Überfeuchtung, das heißt ein auch nur lokales "Absaufen" der Brennstoffzellen zu vermeiden, wird eine durch die Spülvorrichtung 23 durchgeführte Spulprozedur entsprechend angepasst.

Im Brennstoffzellen-Betrieb, beispielsweise in der Winter-Saison, wird der im Elektrolyse-Betrieb, beispielsweise in der Sommer-Saison, erzeugte und getrocknete Wasserstoff genutzt, um das Trocknungsmittel zu regenerieren. Der getrocknete Wasserstoff wird in der Brennstoffzellen-Saison vorzugsweise vollständig durch den Trocknungsbehälter 42a und das Trocknungsmittel 43 geleitet. Idealerweise, aber nicht zwingend, wird der Trocknungsbehälter 42a dabei entgegen der Strömungsrichtung im Elektrolyse-Betrieb durchströmt.

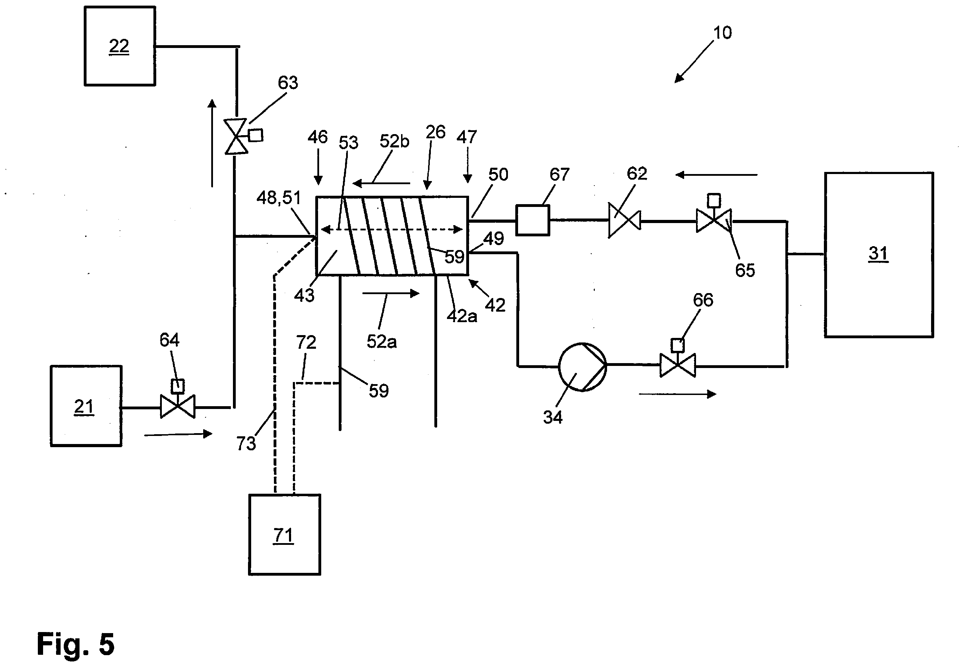

Zur Optimierung der Regeneration kann der Druck in dem Trocknungsbehälter 42a im Brennstoffzellen-Betrieb reduziert werden. Bei gleichem Massenstrom erhöht sich dabei der Wasserstoff-Volumenstrom, aber auch die Strömungsgeschwindigkeit. Alternativ könnte in diesem Fall die Temperatur leicht angehoben werden, was anhand eines weiteren Ausführungsbeispiels in Figur 5 dargestellt und weiter unten näher erläutert wird.

Bei der Regeneration muss der Wasserstroff-Druck nahe dem Brennstoffzellen-Niveau sein. Bei einer Beladung bei etwa 20bar und einer Trocknung bei 2 bar kann theoretisch beispielsweise die 10fache Menge an Wasserdampf aus dem Trocknungsmaterial 43 wegtransportiert werden. Wenn total trockener Wasserstoff als Regenerationsmittel in den Trocknungsbehälter 42a eintritt, kann beispielsweise während einer 1000h Laufzeit der Brennstoffzellen damit das Trocknungsmittel 43 wieder vollkommen trocken werden.

Wenn die Trocknung allein während der Brennstoffzellen-Saison nicht möglich ist, kann die Brennstoffzelleneinrichtung 22 beispielsweise kurzzeitig auch während der Elektrolyse-Saison gestartet werden.

Figur 5 zeigt ein viertes Ausführungsbeispiel, bei dem eine Regeneration des Trocknungsmittels 43 mittels getrocknetem Wasserstoff als Regenerationsmittel erfolgt In Figur 5 ist, in Anlehnung an das Ausführungsbeispiel gemäß Figur 2 und 4, so dass diesbezüglich auch auf die entsprechenden Ausführungen zu diesen Figuren Bezug genommen und verwiesen wird, eine Trocknungsbehältereinrichtung 42 mit einem Trocknungsbehälter 42a dargestellt, wobei sich in dem Trocknungsbehälter 42a ein Trocknungsmittel 43 befindet.

Die Trocknereinrichtung 26 ist Bestandteil des Energiesystem 10, das zunächst eine Elektrolyseeinrichtung 21 zur Erzeugung von Wasserstoff, einen Kompressor 34 und eine Hochdruck-Speichereinrichtung 32 für den erzeugten Wasserstoff, sowie eine Brennstoffzelleneinrichtung 22 aufweist.

Die Trocknereinrichtung 26 weist eine Trocknungsbehältereinrichtung 42 mit einer Eingangsseite 46 und einer Ausgangsseite 47 auf, die die Eingangsseite 46 und die Ausgangsseite 47 des Trocknungsbehälters 42a bilden. In dem Trocknungsbehälter 42a befindet sich ein Trocknungsmittel 43. Der Trocknungsbehälter 42 kann aber auch wie in Figur 2 oder 3 dargestellt ausgebildet sein.

Der in der Elektrolyseeinrichtung 21 erzeugte, noch feuchte Wasserstoff durchströmt ein Absperrventil 64 bevor er über den Zugang 48 eintrittsseitig in den Trocknungsbehälter 42a eintritt und diesen in einer ersten Strömungsrichtung 52a durchströmt. Durch das Trocknungsmittel 43 wird der Wasserstoff getrocknet. Austrittseitig verlässt der getrocknete Wasserstoff den Trocknungsbehälter 42a über einen Abgang 49 und wird über einen Kompressor 34 und ein Absperrventil 66 oder alternativ über ein Rückschlagventil in der Hochdruckspeichereinrichtung 31 eingespeichert.

Aufgrund der Trocknungsprozedur nimmt das Trocknungsmittel 43 im Trocknungsbehälter 42a Feuchtigkeit auf und muss deshalb von Zeit zu Zeit regeneriert, das heißt getrocknet werden. Dies geschieht mit Hilfe des getrockneten und in der Hochdruckspeichereinrichtung 31 gespeicherten Wasserstoffs, der die Funktion des Regenerationsmittels übernimmt.

Zu Regenerationszwecken wird der getrocknete Wasserstoff der Hochdruckspeichereinrichtung 31 entnommen, durchströmt ein Absperrventil 65, und ein Druckminderungsventil 62, mit dem der Volumenstrom eingestellt werden kann, und tritt über einen Zugang 50 in den Trocknungsbehälter 42 ein. Im gezeigten Beispiel sind der Abgang 49 und der Zugang 50 als getrennte Komponenten ausgebildet. Das Regenerationsmittel durchströmt den Trocknungsbehälter 42a in einer von der ersten Strömungsrichtung 52b abweichenden zweiten Strömungsrichtung 52b, hier in entgegengesetzter, bidirektionaler Richtung 53. Das Regenerationsmittel nimmt Feuchtigkeit aus dem Trocknungsmittel 43 auf, wodurch dieses getrocknet wird. Dabei wird das Regenerationsmittel angefeuchtet, bevor es den Trocknungsbehälter 42a ausgangsseitig über den Abgang 51 verlässt. Im gezeigten Beispiel sind der Abgang 51 und der Zugang 48 als eine einzige Komponente ausgebildet. Anschließend kann das Reaktionsmittel, bei dem es sich um Wasserstoff handelt, über ein Rückschlagventil 63 der Brennstoffzelleneinrichtung 22 zur Verfügung gestellt werden.

Im Brennstoffzellen-Betrieb, beispielsweise in der Winter-Saison, wird der im Elektrolyse-Betrieb, beispielsweise in der Sommer-Saison, erzeugte und getrocknete Wasserstoff genutzt, um das Trocknungsmittel 43 zu regenerieren. Der getrocknete Wasserstoff wird in der Brennstoffzellen-Saison vorzugsweise vollständig durch Trocknungsbehälter 42a und das Trocknungsmittel 43 geleitet. Idealerweise, aber nicht zwingend, wird der Trocknungsbehälter 42a dabei entgegen Strömungsrichtung im Elektrolyse-Betrieb durchströmt.

Zur Optimierung der Regeneration kann der Druck in dem mindestens 1 Trocknungsbehälter 42a im Brennstoffzellen-Betrieb reduziert werden. Bei gleichem Massenstrom erhöht sich dabei der Wasserstoff-Volumenstrom, aber auch die Strömungsgeschwindigkeit. Alternativ oder zusätzlich kann in diesem Fall die Temperatur leicht angehoben werden. Dies erfolgt mittels einer Heizeinrichtung 59, die zumindest bereichsweise mit dem Trocknungsbehälter 42a zusammenwirkt.

Das in Figur 5 dargestellte Energiesystem 10 weist weiterhin eine Steuereinrichtung 70 auf. Darin werden die Messung 71 der elektrischen Heizleitung und die Messungen 72 der Temperatur am Abgang 51 des Regenerationsmittels aus dem Trocknungsbehälter 42a erfasst und weiterverarbeitet. Insbesondere kann darauf basierend gegebenenfalls der Trocknungsgrad beziehungsweise die Feuchte in dem Trocknungsbehälter 42a variiert, beispielsweise erhöht oder reduziert werden.

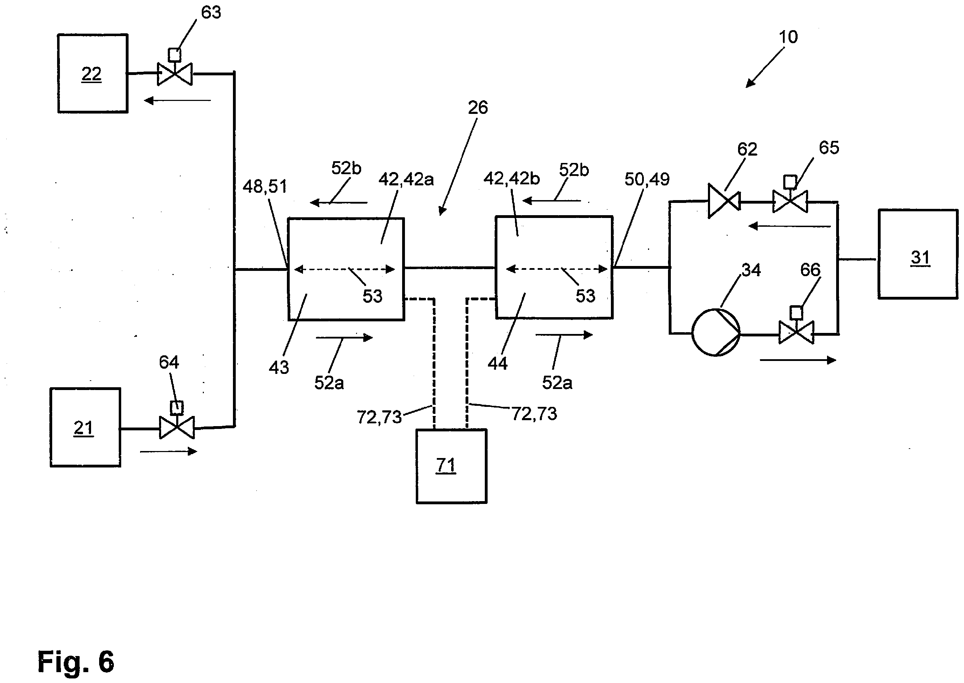

Figur 6 zeigt ein fünftes Ausführungsbeispiel, bei dem die Trocknereinrichtung 26 auch hier für eine Regeneration des Trocknungsmittels mittels eines Regenerationsmittels in Form von getrocknetem Wasserstoff bereitgestellt ist. Das Ausführungsbeispiel gemäß Figur 6 baut auf dem Ausführungsbeispiel gemäß Figur 5 auf, so dass diesbezüglich auf die entsprechenden Ausführungen zu Figur 5 vollinhaltlich Bezug genommen und verwiesen wird. Gleiche Bauteile sind dabei mit identischen Bezugsziffern versehen. Im Folgenden wird deshalb nur auf die Unterschiede eingegangen.

Bei dem Ausführungsbeispiel gemäß Figur 6 weist die Trocknereinrichtung 26 eine zweite Trocknerstufe auf, so dass die Trocknereinrichtung 26 eine Trocknerbehältereinrichtung 42 mit zwei Trocknerbehältern 42a, 42b aufweist, die in Reihe geschaltet sind. In dem ersten Trocknerbehälter 42a, der der Elektrolyseeinrichtung 21 und der Brennstoffzelleneinrichtung 22 zugewandt ist, befindet sich ein erstes Trocknungsmittel 43, beispielsweise Silicagel. In dem zweiten Trocknungsbehälter 42b, der der Hochruckspeichereinrichtung 31 zugewandt ist, befindet sich ein zweites Trocknungsmittel 44, beispielsweise Zeolith oder eine Molsieb-Substanz. Der erste Trocknungsbehälter 42a ist vorzugsweise größer als der zweite Trocknungsbehälter 42b. Die Ausgestaltung der Trocknungsbehältereinrichtung 42 ist an das Ausführungsbespiel in Figur 3 angelehnt, so dass diesbezüglich auch auf die entsprechenden Ausführungen weiter oben vollinhaltlich Bezug genommen und verwiesen wird.

Die zweite Trocknerstufe in Form des zweiten Trocknungsbehälters 42b, der vorzugsweise mit einem anderen Trocknungsmittel 44 befüllt ist, ist vorzugsweise beheizbar, so wie in Figur 5 dargestellt und beschrieben, ausgeführt und in seinem geometrischen Fassungsvermögen anders dimensioniert als die erste Trocknerstufe des ersten Trocknungsbehälters 42a. Beide Trocknerbehälter 42a und 42b wirken mit einer einzigen Steuereinrichtung 71 zusammen, so wie in Figur 5 dargestellt und beschrieben.

Bei der Ausführung gemäß Figur 6 werden die beiden Trocknungsbehälter 42a, 42b prinzipiell seriell betrieben. Bei der Beladung nimmt zunächst der erste Trocknungsbehälter 42a den größten Teil des zu adsorbierenden Wassers auf. Die zweite Stufe im zweiten Trocknungsbehälter 42a dient der Restentfeuchtung auf besonders niedrigen Wassergehalt. Optional installierte Beheizungen in Form der Heizeinrichtung 59 sind abgeschaltet. Bei der Regeneration wird die Anordnung in umgekehrter Richtung durchströmt. Bei der Regeneration wird vorzugsweise zunächst die optional beheizbare zweite Stufe, das heißt der zweite Trocknungsbehälter 42b beheizt, bis die Regeneration nahezu vollständig erfolgt ist. Abhängig vom gewählten Betriebsführungskonzept kann die ebenfalls optional beheizbare erste Stufe in Form des ersten Trocknungsbehälters 42a entweder energiesparend unbeheizt und langsam oder aber beheizt und schneller regeneriert werden.

Gemäß dieser Ausführungsform werden zwei oder mehr verschiedene Trocknungsmittel 43, 44, das heißt Adsorbentien, in zwei oder mehr Trocknungsbehältern 42a, 42b seriell durchströmt. Der zu trocknende Wasserstoff strömt in der ersten Strömungsrichtung 52a. Das Regenerationsmittel strömt in der zu ersten Strömungsrichtung 52a abweichenden zweiten Strömungsrichtung 52b, hier in entgegengesetzter, bidirektionaler Richtung 53. Besonders vorteilhaft ist dies, wenn die Trocknungs- und Regenerationsparameter der mindestens zwei Trocknungsmittel 43, 44 deutlich unterschiedlich sind. Dies ist beispielsweise bei den für die Trocknung von Gasen üblichen Arten von Silicagel und Zeolithen beziehungsweise Molsieb-Substanzen der Fall. Silicagel desorbiert druckabhängig bereits bei vergleichsweise niedrigen Temperaturen von beispielsweise 20-70°C, während Zeolithe beziehungsweise Molsieb-Substanzen bei vergleichbarerem Druck und Beladungsgrad mit Wasser erst bei deutlich höheren Temperaturen von beispielsweise 100-300°C des Wasserdampf desorbieren beziehungsweise freisetzen. Mit Zeolithen oder Molsieben lassen sich andererseits die gewünschten sehr niedrigen Taupunkte bei der Trocknung noch bei höherem Beladungsgrad mit Wasser, also deutlich leichter erzielen, beispielsweise bis auf einen Taupunkt von -30°C oder niedriger. Beim Trocknungsvorgang wird in diesem Beispiel bevorzugt zunächst der, bevorzugt größere, Trocknungsbehälter 42a, der das erste Trocknungsmittel 43, beispielsweise in Form von Silicagel, aufweist, durchströmt und der bezüglich der zu speichernden Stoffmenge größere Anteil des Wassergehaltes entfernt. Im nachfolgenden, bevorzugt kleineren zweiten Trocknungsbehälter 42b entfernt das zweite Trocknungsmittel 44, beispielsweise ein Zeolith oder eine Molsieb-Substanz, den kleineren Rest des Wassergehaltes bis zum Taupunkt von beispielsweise -30°C. In der Desorptionsphase wird dann zunächst der zweite Trocknungsbehälter 42b mit dem zweiten Trocknungsmittel 44 durchströmt, wobei der zweite Trocknungsbehälter 42b beispielsweise mittels einer Heizeinrichtung 59, etwa mittels beispielsweise elektrischer Beheizung, auf eine relativ hohe Temperatur von beispielsweise 100-150 °C gebracht wird und bei dieser Temperatur so lange gehalten wird, bis die Regeneration Trocknungsmittels 44 in diesem Behälter 42b abgeschlossen ist. Der nachfolgend durchströmte erste Trocknungsbehälter 42a mit dem ersten Trocknungsmittel 43 kann dann gänzlich ohne Beheizung beispielsweise bei Raumtemperatur oder auch bei durch geeignete Beheizung bei nur leicht erhöhter Temperatur von beispielsweise 50°C mit dann größerer Regenerationsrate betrieben und regeneriert werden. Insgesamt ist dann der Energieaufwand für die Beheizung zur Deckung der Abwärme und der Desorptionsenergie verkleinert und/oder die Regenerationszeit beider Trocknungsbehälter 42a, 42b insgesamt verkürzt.

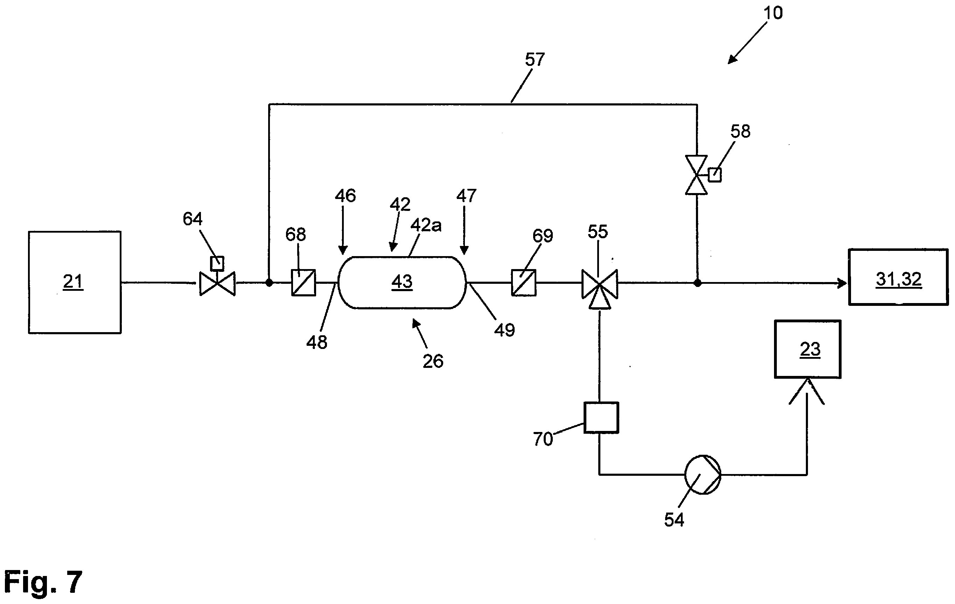

Figur 7 zeigt ein Ausführungsbeispiel, bei dem eine Regeneration des Trocknungsmittels dadurch erfolgt, dass die Trocknungsbehältereinrichtung 42, die insbesondere einen Trocknungsbehälter 42a aufweist, unter Verwendung einer Vakuumpumpe 54 evakuiert wird. Dieser Regenerationsvorgang wird insbesondere in Form einer Ergänzung zu den in den Figuren 2 bis 6 dargestellten Ausführungsbeispielen eingesetzt.

Die Trocknereinrichtung 26 ist Bestandteil des Energiesystem 10, das zunächst eine Elektrolyseeinrichtung 21 zur Erzeugung von Wasserstoff, eine Speichereinrichtung 31, 32, bestehend aus Hochdruckspeicher 31 und Mitteldruckspeicher 32 für den erzeugten Wasserstoff, sowie eine Brennstoffzelleneinrichtung (nicht dargestellt) aufweist.

Die Trocknereinrichtung 26 weist eine Trocknungsbehältereinrichtung 42 mit einem Trocknungsbehälter 42a auf, wobei der Trocknungsbehälter 42a eine Eingangsseite 46 und eine Ausgangsseite 47 aufweist. In dem Trocknungsbehälter 42a befindet sich ein Trocknungsmittel 43. Der Trocknungsbehälter 42a kann aber auch wie in Figur 2 oder 3 dargestellt ausgebildet sein.

Der in der Elektrolyseeinrichtung 21 erzeugte, noch feuchte Wasserstoff durchströmt ein Absperrventil 64 bevor er über einen Partikelfilter 68 und über den Zugang 48 eintrittsseitig in den Trocknungsbehälter 42a eintritt und diesen durchströmt. Durch das Trocknungsmittel 43 wird der Wasserstoff getrocknet. Austrittseitig verlässt der getrocknete Wasserstoff den Trocknungsbehälter 42a über einen Abgang 49 und wird über einen Partikelfilter 69 in der Speichereinrichtung 31, 32 eingespeichert.

Im Abgang 49 oder hinter dem Abgang 49 ist eine Vakuumpumpe 54 über ein Umschaltventil 55 und ein Rückschlagventil 70 dem Trocknungsbehälter 42 zugeordnet.

Aufgrund der Trocknungsprozedur nimmt das Trocknungsmittel 43 im Trocknungsbehälter 42a Feuchtigkeit auf und muss deshalb von Zeit zu Zeit regeneriert, das heißt getrocknet werden. Dies geschieht mit Hilfe der Vakuumpumpe 54. Zu Regenerationszwecken wird die Vakuumpumpe 54 aktiviert und saugt Wasserstoff und im Trocknungsmittel 43 befindliche Feuchtigkeit aus dem Trocknungsbehälter 42a ab. Diese wird anschließend zu einer Spüleinrichtung 23 transportiert. Um nach dem Regenerationsvorgang die für den Trocknungsvorgang erforderlichen Bedingungen im Trocknungsbehälter 42a wieder herzustellen, ist eine Bypassleitung 57 mit einem Druckaufbauventil 58 vorgesehen, die vor oder in dem Zugang 58 und hinter oder nach dem Abgang 49 abzweigt.

Um den Regenerationsvorgang zu beginnen, wird zunächst das Absperrventil 64 geschlossen, gegebenenfalls auch entsprechende Absperrventile zu der Speichereinrichtung 31, 32. Das Umschaltventil 55 wird in Richtung Vakuumpumpe 54 geschaltet. Die Vakuumpumpe 54 wird einschaltet und der Trocknungsbehälter 42a evakuiert. Abgesaugtes Wasser/Wasserstoff-Gemisch wird abgeführt, beispielsweise über die Spüleinrichtung 23. Vorzugsweise kann eine wie in den Figuren 5 und 6 dargestellte Heizeinrichtung 59 zum Einsatz kommen. Danach erfolgt eine Wiederbefüllung des Trocknungsbehälters 42a mit Wasserstoff über die Bypassleitung 57 bei entsprechender Stellung des Druckaufbauventils 58.

### Bezugszeichenliste

- 10: Energiesystem (Gebäudeenergiesystem)
- 20: Erstes Untersystem (Innensystem)
- 21: Elektrolyseeinrichtung
- 22: Brennstoffzelleneinrichtung
- 23: Spüleinrichtung (Spülkammer)
- 24: Rückschlagventileinrichtung
- 25: Filtereinrichtung
- 26: Trocknereinrichtung
- 30: Zweites Untersystem (Außensystem)
- 31: Hochdruckspeichereinrichtung
- 32: Mitteldruckspeichereinrichtung
- 33: Ventileinrichtung
- 34: Kompressoreinrichtung
- 35: Rückschlagventileinrichtung
- 36: Entspannungsvorrichtung (Druckminderer)
- 40: Verbindungsleitungseinrichtung
- 40a bis 40k: Leitungsabschnitt
- 41: Druckmessvorrichtung
- 42: Trocknungsbehältereinrichtung
- 42a: Erster Trocknungsbehälter
- 42b: Zweiter Trocknungsbehälter
- 43: Erstes Trocknungsmittel
- 44: Zweites Trocknungsmittel
- 45: Trenneinrichtung
- 46: Eingangsseite der Trocknungsbehältereinrichtung
- 47: Ausgangsseite der Trocknungsbehältereinrichtung
- 48: Zugang für in der Elektrolyseeinrichtung erzeugten Wasserstoff
- 49: Abgang für den im Trocknungsbehälter getrockneten Wasserstoff
- 50: Zugang für das Regenerationsmittel
- 51: Abgang für das Regenerationsmittel
- 52a: Erste Strömungsrichtung
- 52b: Zweite Strömungsrichtung
- 53: Gegenstrom
- 54: Vakuumpumpe
- 55: Umschaltventil
- 56: Rückschlagventil
- 57: Bypassleitung
- 58: Druckaufbauventil
- 59: Heizeinrichtung
- 60: Gaskühler
- 61: Rückschlagventil
- 62: Druckminderungsventil
- 63: Absperrventil
- 64: Absperrventil
- 65: Absperrventil
- 66: Absperrventil
- 67: Rückschlagventil
- 68: Partikelfilter
- 69: Partikelfilter
- 70: Rückschlagventil
- 71: Steuereinrichtung
- 72: Messung elektrischer Heizleistung
- 73: Messung Temperatur
- 100: Lüftungseinrichtung
- 200: Wärmepumpeneinrichtung

## Patentansprüche

1. Energiesystem (10), aufweisend eine Elektrolyseeinrichtung (21) zur Erzeugung von Wasserstoff, eine Speichereinrichtung (31; 32) zum Speichern des erzeugten Wasserstoffs, sowie eine Trocknereinrichtung (26) zum Trocknen des in der Elektrolyseeinrichtung (21) erzeugten Wasserstoffs, wobei die Trocknereinrichtung (26) eine Trocknungsbehältereinrichtung (42) aufweist, in der sich mindestens eine Art eines Trocknungsmittels (43; 44) befindet, wobei die Trocknungsbehältereinrichtung (42) eine Eingangsseite (46) und eine Ausgangsseite (47) aufweist, wobei die Eingangsseite (46) der Trocknungsbehältereinrichtung (42) einen Zugang (48) für den von der Elektrolyseeinrichtung (21) erzeugten Wasserstoff aufweist, und wobei die Ausgangsseite (47) der Trocknungsbehältereinrichtung (42) einen Abgang (49) für den in der Trocknungsbehältereinrichtung (42) getrockneten Wasserstoff aufweist, wobei der Wasserstoff in einer ersten Strömungsrichtung (52a) durch die Trocknungsbehältereinrichtung (42) führbar ist oder geführt wird, und wobei die Trocknereinrichtung (26) für eine Regeneration des in der Trocknungsbehältereinrichtung (42) befindlichen Trocknungsmittels (43; 44) mittels eines Regenerationsmittels in Form von getrocknetem Wasserstoff bereitgestellt ist, **dadurch gekennzeichnet, dass** das Regenerationsmittel in einer von der ersten Strömungsrichtung (52a) abweichenden zweiten Strömungsrichtung (52b), durch die Trocknungsbehältereinrichtung (42) führbar ist oder geführt wird, und dass der Wasserstoff und das Regenerationsmittel insbesondere im Gegenstrom(53) durch die Trocknungsbehältereinrichtung (42) führbar sind oder geführt werden.

2. Energiesystem nach Anspruch 1, **dadurch gekennzeichnet, dass** die Trocknungsbehältereinrichtung (42), insbesondere die Ausgangsseite (47) der Trocknungsbehältereinrichtung (42), einen Zugang (50) für das Regenerationsmittel aufweist, und dass die Trocknungsbehältereinrichtung (42), insbesondere die Eingangsseite (46) der Trocknungsbehältereinrichtung (42), einen Abgang (51) für das Regenerationsmittel aufweist.

3. Energiesystem nach einem der Ansprüche 1 oder 2, **dadurch gekennzeichnet,**
**dass** der Trocknereinrichtung (26) mindestens eine Vakuumpumpe (54) zugeordnet ist, die, mit der Trocknungsbehältereinrichtung (42) oder mit dem Abgang (49) für den in der Trocknungsbehältereinrichtung (42) getrockneten Wasserstoff verbunden ist.

4. Energiesystem nach einem der Ansprüche 1 bis 3, **dadurch gekennzeichnet, dass** der Wasserstoff und das Regenerationsmittel bei unterschiedlichen Druckniveaus durch die Trocknungsbehältereinrichtung (42) führbar sind oder geführt werden.

5. Energiesystem nach einem der Ansprüche 1 bis 4, **dadurch gekennzeichnet, dass** die Trocknungsbehältereinrichtung (42) einen einzigen Trocknungsbehälter (42a) aufweist, in dem sich ein Trocknungsmittel befindet, oder in dem sich zwei oder mehr unterschiedliche Trocknungsmittel (43; 44), insbesondere getrennt voneinander, befinden.

6. Energiesystem nach einem der Ansprüche 1 bis 4, **dadurch gekennzeichnet, dass** die Trocknungsbehältereinrichtung (42) zwei oder mehr Trocknungsbehälter (42a, 42b) aufweist, die in Reihenschaltung oder in Parallelschaltung zueinander angeordnet sind, und dass sich in jedem Trocknungsbehälter (42a, 42b) wenigstens ein Trocknungsmittel (43; 44) befindet.

7. Energiesystem nach einem der Ansprüche 1 bis 6, **dadurch gekennzeichnet, dass** das Trocknungsmittel (43; 44) als ein Adsorbent, insbesondere in Form von Zeolith, Silicagel, oder Aluminiumoxid, oder als ein Molsieb ausgebildet ist.

8. Energiesystem nach einem der Ansprüche 1 bis 7, **dadurch gekennzeichnet, dass** eine die Trocknungsbehältereinrichtung (42) oder zumindest einzelne Trocknungsbehälter (42a, 42b) der Trocknungsbehältereinrichtung (42) umgehende Bypassleitung (57) bereitgestellt ist.

9. Energiesystem nach einem der Ansprüche 1 bis 8, **dadurch gekennzeichnet, dass** die Trocknereinrichtung (26) derart bereitgestellt ist, dass der in der Trocknungsbehältereinrichtung (42), insbesondere in zumindest einzelnen Trocknungsbehältern (42a, 42b) der Trocknungsbehältereinrichtung (42) herrschende Druck variierbar ist und/oder dass die in der Trocknungsbehältereinrichtung (42), insbesondere in zumindest einzelnen Trocknungsbehältern (42a, 42b) der Trocknungsbehältereinrichtung (42) herrschende Trocknungsgeschwindigkeit variierbar ist und/oder dass die in der Trocknungsbehältereinrichtung (42), insbesondere in zumindest einzelnen Trocknungsbehältern (42a, 42b) der Trocknungsbehältereinrichtung (42)herrschende Regenerationsgeschwindigkeit variierbar ist und/oder dass die Feuchte des die Trocknungsbehältereinrichtung (42), insbesondere zumindest einzelne Trocknungsbehälter (42a, 42b) der Trocknungsbehältereinrichtung (42) durchströmenden Wasserstoffs variierbar ist und/oder dass der Regenerationsgrad des in der Trocknungsbehältereinrichtung (42), insbesondere in zumindest einzelnen Trocknungsbehältern (42a, 42b) der Trocknungsbehältereinrichtung (42) befindlichen Trocknungsmittels (43; 44) variierbar ist.

10. Energiesystem nach einem der Ansprüche 1 bis 9, **dadurch gekennzeichnet, dass** wenigstens eine Heizeinrichtung (59) bereitgestellt ist, die zumindest einem Bereich der Trocknungsbehältereinrichtung (42), und/oder zumindest einem Bereich von wenigstens einem Trocknungsbehälter (42a, 42b) der Trocknungsbehältereinrichtung (42) und/oder dem Zugang (50) für das Regenerationsmittel zugeordnet ist.

11. Verfahren zum Regenerieren eines in einer Trocknungsbehältereinrichtung (42) einer Trocknereinrichtung (26) befindlichen Trocknungsmittels (43; 44) in einem Energiesystem (10), welches aufweist eine Elektrolyseeinrichtung (21) zur Erzeugung von Wasserstoff, eine Speichereinrichtung (31; 32) zum Speichern des erzeugten Wasserstoffs, sowie eine Trocknereinrichtung (26) zum Trocknen des in der Elektrolyseeinrichtung (21) erzeugten Wasserstoffs, wobei die Trocknereinrichtung (26) eine Trocknungsbehältereinrichtung (42) aufweist, in dem sich mindestens eine Art eines Trocknungsmittel (43; 44) befindet, wobei die Trocknungsbehältereinrichtung (42) eine Eingangsseite (46) und eine Ausgangsseite (47) aufweist, wobei die Eingangsseite (46) der Trocknungsbehältereinrichtung (42) einen Zugang (48) für den von der Elektrolyseeinrichtung (21) erzeugten Wasserstoff aufweist, und wobei die Ausgangsseite (47) der Trocknungsbehältereinrichtung (42) einen Abgang (49) für den in der Trocknungsbehältereinrichtung (42) getrockneten Wasserstoff aufweist, wobei das Verfahren insbesondere in einem Energiesystem gemäß einem der Ansprüche 1 bis 10 durchgeführt wird, **dadurch gekennzeichnet,**
**dass** insbesondere der Wasserstoff in einer ersten Strömungsrichtung (52a) durch die Trocknungsbehältereinrichtung (42) geführt wird, dass das Trocknungsmittel (43; 44) regeneriert wird, in dem während des Regenerationsvorgangs ein Regenerationsmittel in Form von getrocknetem Wasserstoff in die Trocknungsbehältereinrichtung (42) eintritt, in einer von der ersten Strömungsrichtung (52a) des Wasserstoffs durch die Trocknungsbehältereinrichtung (42) abweichenden zweiten Strömungsrichtung (52b) durch die Trocknungsbehältereinrichtung (4) geführt wird, diese und das darin befindliche Trocknungsmittel (43; 44), insbesondere im Gegenstrom (53), durchströmt und dabei das Regenerationsmittel regeneriert.

12. Verfahren nach Anspruch 11, **dadurch gekennzeichnet, dass** der Wasserstoff und das Regenerationsmittel bei unterschiedlichen Druckniveaus durch die Trocknungsbehältereinrichtung (42) geführt werden.

13. Verfahren nach Anspruch 11 oder 12, **dadurch gekennzeichnet, dass** das Regenerationsmittel in Form des getrockneten Wasserstoffs aus der Speichereinrichtung (31; 32) zum Speichern des erzeugten Wasserstoffs entnommen wird, dass das Regenerationsmittel durch die Trocknungsbehältereinrichtung (42), insbesondere vollständig, geleitet wird, und dass das Regenerationsmittel nach Verlassen der Trocknungsbehältereinrichtung (42) einer Brennstoffzelleneinrichtung (42) und/oder einem Rekombinator und/oder einer Ableitung zugeführt wird.

14. Verfahren nach einem der Ansprüche 11 bis 13, wobei die Trocknungsbehältereinrichtung (42) einen einzigen Trocknungsbehälter (42a) aufweist, in dem sich zwei oder mehr unterschiedliche Trocknungsmittel (43; 44), insbesondere getrennt voneinander, befinden, oder wobei die Trocknungsbehältereinrichtung (42) zwei oder mehr Trocknungsbehälter (42a, 42b) aufweist, die in Reihenschaltung oder in Parallelschaltung zueinander angeordnet sind, wobei sich in jedem Trocknungsbehälter (42a, 42b) wenigstens ein Trocknungsmittel (43; 44) befindet, und/oder wobei sich in verschiedenen Trocknungsbehältern (42, 42b) verschiedene Trocknungsmittel (43; 44) befinden, **dadurch gekennzeichnet, dass** die Trocknung unter Nutzung der unterschiedlichen Adsorptionskennlinien der unterschiedlichen Trocknungsmittel erfolgt.

15. Verfahren nach einem der Ansprüche 11 bis 14, **dadurch gekennzeichnet, dass** die Temperatur der Trocknungsbehältereinrichtung (42) oder wenigstens eines Trocknungsbehälters (42a, 42b), und/oder die Temperatur wenigstens eines Trocknungsmittels (43; 44), und/oder die Temperatur des Zugangs (50) für das Regenerationsmittel während des Regenerationsvorgangs mittels wenigstens einer Heizeinrichtung (59), zumindest zeitweilig und/oder bereichsweise, variiert wird.
